Europäisches Patentamt

European Patent Office

Office européen des brevets

(19)

(11) **EP 0 658 572 B1**

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int Cl.⁶: **C08F 8/00**, C08F 8/46,
C10M 145/16, C10M 149/06

(21) Anmeldenummer: **94106143.4**

(22) Anmeldetag: **20.04.1994**

(54) **Aschefreie, detergierend-dispergierend wirkende polymere Zusatzstoffkomposition und Verfahren zur deren Herstellung**

Ashless detergent-dispersant polymeric additive mixtures and process for their manufacture

Mélanges sans cendres d'additifs polymères dispersants et détergents, leur procédé de préparation

(84) Benannte Vertragsstaaten:
**AT BE CH DE DK ES FR GB GR IE IT LI LU MC NL PT SE**
Benannte Erstreckungsstaaten:
**SI**

(30) Priorität: **16.12.1993 HU 9303614**

(43) Veröffentlichungstag der Anmeldung:
**21.06.1995 Patentblatt 1995/25**

(73) Patentinhaber:
• **MOL MAGYAR OLAJ ES GAZIPARI RESZVENYTARSASAG**
**H-2440 Szazhalombatta (HU)**
• **VESZPREMI EGYETEM**
**H-8201 Veszprém (HU)**

(72) Erfinder:
• **Dénes, Ferenc, Dr.**
**H-2921 Komárom (HU)**
• **Kis, János**
**H-2931 Almásfüzito (HU)**
• **Baladincz, Jeno**
**H-2900 Komárom (HU)**

• **Auer, János**
**H-2903 Komárom (HU)**
• **Deák, Gyula, Dr.**
**H-4400 Nyiregyháza (HU)**
• **Bartha, Lászlo, Dr.**
**H-8200 Veszprém (HU)**
• **Hancsok, Jeno, Dr.**
**H-8200 Veszprém (HU)**
• **Kovács, Magdolna, Dr.**
**H-8200 Veszprém (HU)**

(74) Vertreter: **Viering, Jentschura & Partner**
**Postfach 22 14 43**
**80504 München (DE)**

(56) Entgegenhaltungen:
**EP-A- 0 208 560          EP-A- 0 307 132**
**EP-A- 0 422 857**

• **PATENT ABSTRACTS OF JAPAN** vol. 18, no. 2010 (C-78) & JP-A-53 071 191 (MITSUI SEKIYU KAGAKU KOGYO K.K.) 24. Juni 1978
• **PATENT ABSTRACTS OF JAPAN** vol. 11, no. 315 (C-451) (2762) 14. Oktober 1987 & JP-A-62 101 615 (JAPAN SYNTHETIC RUBBER CO. LTD.) 12. Mai 1987

**Beschreibung**

Die Anmeldung betrifft eine aschefreie, detergierend-dispergierend wirkende (im weiteren DD) polymere Zusatzstoffkomposition und ein Verfahren zur deren Herstellung, welche Polyolefin-Bernsteinsäureanhydrid-Derivate enthält, und eine viskositäts- und viskositätsindexerhöhende, weiterhin abriebinhibierende Wirkung besitzt, und zur Verbesserung der Eigenschaften von Schmierölen bevorzugt verwendbar ist.

Zusatzstoffe in der Art von Polyolefin-Succinimiden oder Alkenyl-Bernsteinsäuren wurden seit drei Jahrzehnten verbreitet zur Verbesserung der detergierend-dispergierenden Eigenschaften von Motorölen verwendet. Diese sind auf Grund ihrer polaren, oft basischen Struktur geeignet, die Entstehung von unlöslichen säurigen Verunreinigungen und von Ablagerungen an Metalloberflächen während des Motorbetriebes zu begrenzen. Dadurch wird die Lebensdauer der Motoren und die Verwendungsdauer der Öle erhöht.

Die sogenannten modifizierten Derivate, welche verschiedene Stoffe, wie Schwefel, Bor, Halogene, Molybdän und Kupfer enthalten, zeigen neben der DD Wirkung eine korrosionsinhibierende (korrosionshemmende) und abriebinhibierende, und die durch hochmolekulare Polymerseitenkette (Mn > 2000) substituierten Typen auch eine viskositäts- und viskositätsindexerhöhende Wirkung.

Die Alkenyl-Bernsteinsäure-Derivate werden üblicherweise zusammen mit anderen metallhaltigen DD Zusatzstoffen, mit Polymeren, die die Fliesseigenschaften verbessern, weiterhin mit Oxydationsinhibitoren, Korrosionsinhibitoren, Abriebinhibitoren, reibungsvermindernden Stoffen und Schaumbekämpfungsmitteln zu den Schmierölen zugemischt, um die vorteilhaften Wechselwirkungen auch auszunutzen.

Die bekannten Weiterentwicklungen der Zusatzstoffe in den letzten 10 Jahren richten sich auf die Erhöhung der DD Wirksamkeit und der anderen zusätzlichen Wirkungen. Dieses Ziel kann auf Grund der Ergebnisse der durchgeführten Motoruntersuchungen z. B. durch die Erhöhung des Molgewichtes der in der Zusatzstoffsynthese entstehenden Intermediären und Endprodukte, weiterhin durch die Herstellung von sogenannten Polysuccinimiden, Polyestern, Polyesteramiden und ähnlichen Stoffen, welche über polare Gruppen zusammengeknüpft sind, erreicht werden (Verkow H.T.: Mineralöltechnik, 33(9), 17-28, 1988).

Die Herstellung von derartigen Zusatzstoffen beruhte auf der Erkennung, daß im ersten Schritt der Succinimidsynthese bei der Umsetzung von Polyolefinen mit Maleinsäureanhydrid (MSA) unter bestimmten Umständen mit einem Polyolefinmolekül mehr als ein MSA Molekül verknüpft wird, oder Olefin/MSA Copolymere gebildet werden. Durch Umsetzen des so entstandenen Intermediären, welche mehr als zwei Carboxylgruppen enthalten, mit Aminen, Polyaminen, Alkoholen, Polyalkoholen und/oder Alkanolaminen, erhalt man Endprodukte mit Polyimid-, Polyamid-, Polyester- oder Polyesteramidstruktur, die ein gegenüber dem üblichen erhöhtes Molgewicht zeigen (US-PS 4.234.435).

Derartige aschefreie Zusatzstoffe besitzen trotz ihrer guten DD Wirkung nur eine kleine Basenzahl, wegen der Abbindung der meisten der stark basischen Amino- und Iminogruppen, und wirken dadurch im Vergleich mit den üblichen Succinimiden weniger schädigend auf die fluorhaltigen Elastomerdichtungen der Motoren.

Wegen ihrer erhöhten DD Wirkung und der bedeutenden viskositäts- und viskositätsindexerhöhenden Wirkung ermöglicht die Verwendung von derartigen aschefreien Zusatzstoffen neben der Erhöhung des Leistungsniveaus der Motoröle auch die teilweise Auswechslung der üblichen, die Fliesseigenschaften verbessernden Polymerzusatzstoffe, und dadurch die Verminderung der Herstellungskosten der Motoröle. Die bekannten Verfahren unterscheiden sich im wesentlichen nur in der Herstellungsmethode der Alkenyl-Bernsteinsäureanhydrid-Intermediären.

Die Herstellung von derartigen Intermediären ist zum Beispiel in der US-PS 4.234.435 und EP-PS 0.208.560 beschrieben. Das Maleinsäureanhydrid/Polyisobutylen (Mn = 1300-5000) Anlagerungsverhältnis wird hier durch die Zumischung von Chlorkatalysator in einer oder mehreren Stufen und durch die Verwendung von erhöhten Reaktionstemperaturen (160-220 °C) über einen Wert von 1,05 erhöht. Der Nachteil des Verfahrens besteht in der Verwendung von Chlor, welches sowohl technologisch, als auch ökologisch nachteilig ist, und wegen der Anbindung an den Polyolefinmolekülen in dem Endprodukt bezogen auf den Zusatzstoff in einer Menge von etwa 0,001-0,5 Gew.% vorhanden ist.

Es sind auch Verfahren bekannt, in welchen die Addition von Polyisobutylen (PIB) und MSA ohne Katalysator bei hohen Reaktionstemperaturen (über 180 °C) durchgeführt wird. Ein MSA/PIB-Anlagerungsverhältnis über 1 wurde hier durch die Verwendung eines Polyisobutylen-Rohstoffes mit verbesserter Reaktivität und hohem $\alpha$-Olefingehalt (über 70 %) gesichert. Der Nachteil dieses Verfahrens besteht in der Anwendung von wertvollen Rohstoffen und hohen Reaktionstemperaturen (EP-A-0.271.937).

Ein Verfahren mit niedriger Temperatur wurde in der internationalen Anmeldung publiziert unter der Nummer WO 90/03359 beschrieben, nachdem in einem aromatischen oder chlorierten Kohlenwasserstoff-Lösungsmittel unter Verwendung von Radikalinitiatoren Polyisobutylen/Maleinsäureanhydrid Copolymer hergestellt wird. Die Durchschnittszahl der alternierenden PIB/MSA Einheiten beträgt 1-10. Durch die Acylierung mit derartigen Intermediären erhält man Endprodukte, die eine breite Molgewichtsverteilung zeigen, und deshalb die Kaltviskosität der Motoröle bedeutend erhöhen, was die Verwendungskonzentration von diesen bedeutend einschränkt.

Auf Grund der Untersuchung der Zusammenhänge zwischen den Umständen der Zusatzstoffsynthese, bzw. den Wirkungen wurde erkannt, daß die erwähnten Nachteile durch Verwendung von Produkten, welche Polymerzusatzstoffe mit einer neuen molekularen Struktur und verbesserten Eigenschaften enthalten, vermindert oder beseitigt werden können, wobei diese Zusatzstoffe eine Komposition mit einer vorteilhaften Molgewichtsverteilung und einem Mischungsverhältnis bilden.

Gegenstand der Erfindung ist eine aschefreie, detergierend-dispergierend wirkende Zusatzstoffkomposition mit Polymerstruktur enthaltend Polyolefin--Bernsteinsäureanhydrid-Derivate oder deren ölige Lösung, die in Schmierölzubereitungen von Verbrennungsmotoren verwendbar ist, dadurch gekennzeichnet, daß sie aus Komponenten besteht, die an Polyolefinketten mit gleichem numerischen Durchschnittsmolgewicht durchschnittlich 1,3-6 Bernsteinsäureanhydrid-Derivat -Derivat tragen, wobei die Menge der Moleküle mit mehr als drei Ber steinsäureanhydrid-Derivaten 0,1-15 Gew.% beträgt, und wobei das Derivat ein Imid- und/oder Ester- und/oder Amid- und/oder Esteramid-Derivat sein kann, und daß die Zusatzstoffkomposition mindestens zwei Komponenten mit verschiedenen - einem niedrigeren und einem höheren - numerischen Durchschnittsmolgewichten enthält, wobei die Zahl der durch Carboxylgruppen verbundenen Moleküle in den Komponenten mit niedrigerem Durchschnittsmolgewicht durchschnittlich 2-5 und in den Komponenten mit höherem Durchschnitts molgewicht durchschnittlich 6-50 beträgt, und wobei das numerische Durchschnittsmolgewicht der Komponenten mit niedrigerem Molgewicht kleiner ist, als das Sechsfache des Durchschnittsmolgewichts des Ausgangspolyolefins, und das Gewichtsverhältnis der Komponenten mit höherem numerischen Durchschnittsmolgewicht zu den Komponenten mit niedrigerem numerischen Durchschnittsmolgewicht 0,01-5 beträgt.

Gegenstand der Erfindung ist weiterhin ein Verfahren zur Herstellung einer aschefreien, detergierend-dispergierend wirkenden Zusatzstoffkomposition enthaltend Polyolefin-Bernsteinsäureanhydrid-Derivate oder deren öligen Lösungen, dadurch gekennzeichnet, daß man an Polyolefin mit gleichem numerischen Durchschnittsmolgewicht Maleinsäureanhydrid addiert wobei das Molverhältnis von Maleinsäureanhydrid/Polyolefin 1,5-3,5 beträgt, und die Addition in 20-75 Gew.% eines, eine homogene Phase gewährleistenden Lösungsmittels, bezogen auf die Reaktionsmischung, in Gegenwart von 5-25 Gew.% eines Radikalinitiators und 0,01-15 Gew.% eines nebenreaktionsinhibierenden Reagens, bezogen auf das Maleinsäureanhydrid, bei einem Druck von $1-5 \times 10^2$ kPa, einer Temperatur von 110-180°C, einer Zeitdauer von 1-16 Stunden und einer Maleinsäureanhydridkonzentration unter 50 mg/g durchgeführt wird, und das erhaltene Zwischenprodukt, in welchem ein Polyolefinmolekül durchschnittlich 1,3-6 Bernsteinsäureanhydrid-Gruppen trägt, die Menge von Molekülen mit mehr als drei Bersteinsäureanhydrid-Gruppen 0,1-15 Gew.% beträgt und die Verbreitung der Molgewichtsverteilung, bezogen auf das Ausgangspolyolefin, höchstens 50 % beträgt, gewünschtenfalls mit Schmierölraffinat verdünnt, mit 0,5-5 Gew.% an Filtrierhilfsstoff geklärt und filtriert wird, dann das Zwischenprodukt mit einem oder mehreren, mindestens bifunktionalen Verbindungen, enthaltend Amin- und/oder Hydroxigruppen umgesetzt wird, wobei das Molverhältnis der Bernsteinsäureanhydrid-Gruppen zu der Verbindung, enthaltend Amin- und/oder Hydroxygruppen 0,7-5,5 beträgt, und die Acylierung in Gegenwart von 0,1-2 Gew.% eines Katalysators, bezogen auf die Reaktionsmischung, bei einem Druck von $1-6 \times 10^2$ kPa, einer Temperatur von 120-235°C und einer Zeitdauer von 2-15 Stunden durchgeführt, und die erhaltene Komposition gewünschtenfalls auf bekannte Weise modifiziert, verdünnt und filtriert wird.

Gegenstand der Erfindung sind weiterhin das Zwischenprodukt zur Herstellung der obigen Zusatzstoffkompositionen und dessen Herstellung.

Bevorzugte Polyolefine sind die Homopolymere und/oder Copolymere von Olefinen, die die Doppelbindung in $\alpha$-Position besitzen, wie zum Beispiel Ethylen, Propylen, Buten-1, Isobutylen und andere Olefine und Diolefine, sowie die Homo- und-oder Copolymere von 1,3-Butadien in einem numerischen Durchschnittsmolgewicht von 600-50.000, vorzugsweise 800-6.000. Besonders bevorzugt sind die Polyisobutylene mit einem Durchschnittsmolgewicht von 800-6.000.

Als Polyolefin-Bernsteinsäureanhydrid-Derivate werden jene bevorzugt, bei denen an einer Polyolefin-kette durchschnittlich 1,6-6, insbesondere durchschnittlich 1,3-3,0 Bernsteinsäureanhydridgruppen angeknüpft sind, die Menge von Molekülen mit mehr als drei BSA-Gruppen 0,1-15 Gew.%, insbesondere 0,5-5 Gew.% beträgt, und der freie Maleinsäureanhydridgehalt unter 5 mg/g liegt. Die Erhöhung des numerischen Durchschnittsmolgewichts der Komponenten, gemessen mit GPC Methoden, im Verhältnis zu dem Molgewicht von Polyolefin bleibt unter 50 %.

Das Bernsteinsäureanhydrid-Derivat kann ein Imid-und/oder Ester- und/oder Amid- und/oder Esteramid-Derivat sein, wobei die an einer Polyolefinkette vorhandenen Derivate gleich oder verschieden sein können.

Die Zusatzstoffkomposition enthält mindestens zwei Komponenten mit verschiedenen - einem niedrigerem und einem höheren - numerischen Durchschnittsmolgewichten, wobei das numerische Durchschnittsmolgewicht der Komponenten mit niedrigerem Molgewicht kleiner, als das Sechsfache des Durchschnittsmolgewichts des Ausgangspolyolefins ist, und das Gewichtsverhältnis der Komponenten mit höherem Durchschnittsmolgewicht zu den Komponenten mit niedrigerem Durchschnittsmolgewicht 0,01--5 beträgt. Die Molgewichtverteilungskurve der Komponenten mit verschiedenem Molgewicht zeigt ein Minimum oder einen Inflektionspunkt. In den Komponenten mit niedrigerem Durchschnittsmolgewicht beträgt die Zahl der durch Carboxylgruppen verbundenen Moleküle durchschnittlich 2-5. In den Komponenten mit höherem Durchschnittsmolgewicht beträgt die Zahl der durch Carboxylgruppen verbundenen Moleküle durchschnittlich 6-50.

Nach einer bevorzugten Durchführungsvariante kann die erfindungsgemässe Zusatzstoffkomposition in Form einer öligen Lösung vorhanden sein. Die Menge des Öls beträgt in der öligen Lösung mindestens 30 Gew.%, insbesondere 30-80 Gew.%. Als Öl werden die üblichen Ölraffinate, Schmieröle oder Grundöle bevorzugt.

Nach dem erfindungsgemässen Verfahren wird auf eine Polyolefinkette Maleinsäureanhydrid addiert. Während der Umsetzung öffnet sich die Doppelbindung des Maleinsäureanhydrids und lagert sich an die Doppelbindung des Polyolefins an. Die so erhaltene Kette trägt deshalb Bernsteinsäureanhydridgruppen.

Die erste Stufe der Zusatzstoffsynthese, d.h. die Addition von Polyolefin und Maleinsäreanhydrid wird in Gegenwart eines, gute Konversion gewährleistenden Lösungsmittels, in homogener Phase, bei energetisch günstigen niedrigen Temperaturen, unter Parametern, die die unerwünschten Nebenreaktionen, wie die Entstehung von alternierenden Polyolefin/MSA Copolymeren und/oder Homopolymeren verhindern, und erforderlichenfalls unter Zumischung von Inhibitoren und/oder die Reaktionsgeschwindigkeit beeinträchtigenden Verbindungen zu dem Reaktionsgemisch durchgeführt.

Die Umsetzung von Polyolefin mit Maleinsäureanhydrid wird deshalb in Gegenwart von, bezogen auf das Reaktionsgemisch, 20-75 Gew.%, insbesondere 35-60 Gew.% eines Lösungsmittels, welches auch Komponenten mit einem Siedepunkt in Bereich von 110-250 °C enthält und die Ausgangsstoffe und Intermediären gut löst, bei einer Temperatur von 110-180 °C, insbesondere 120-160 °C und einer Zeitdauer von 1-16 Stunden, bei einem Polyolefin/MSA Molverhältnis von 1:1,5-3,5, in Gegenwart von, bezogen auf das Maleinsäureanhydrid, 5-25 Gew.% eines Radikalinitiators, wie Peroxide, Azobisizobutironitril oder Cumolhydroperoxid, und 0,01-5 Gew.% eines nebenreaktionsinhibitierenden Reagens oder deren Mischung, bei einem Druck von $1-5 \times 10^2$ kPa in inerter Atmosphäre, wie Stickstoffatmosphäre durchgeführt.

Es wurde festgestellt, daß ein hohes MSA/Polyolefin Durchschnittsverknüpfungsverhältnis und eine verminderte Menge an im Öl unlöslichen Nebenprodukten dann erreicht werden kann, wenn man als Lösungsmittel oder Lösungsmittelgemisch solche Kohlenwasserstoffe verwendet, welche die Kohlenstoffatomen mindestens zu 20 % in Aromatenbindung enthalten und welche über 5 Gew.% Komponenten mit einem Siedepunkt unter 250 °C enthalten. Mit Hinsicht auf die Verminderung der Menge der in Öl unlösbaren Nebenprodukte ist es wesentlich, daß die Konzentration von MSA im Reaktionsansatz während der Addition unter einem Wert von 55 mg/kg gehalten wird. Diese Bedingung kann z.B. durch die Zugabe von MSA und sich bei Temperaturen von 80-260 °C zersetzendem Radikalinitiator mit entsprechender Geschwindigkeit erfüllt werden.

Um dies zu erreichen, kann der Radikalinitiator in zwei oder mehreren Teilen oder kontinuierlich zugeführt werden.

Als Initiator werden organische Peroxide, Hydroperoxide oder Azoverbindungen, wie Benzoylperoxid, di-tert.-Butylperoxid, Azobisisobutyronitril, Azodicarbonamid oder deren Mischungen bevorzugt.

Die unerwünschten Nebenreaktionen, wie Homopolymerisation, Copolymerisation, alternierende Polymerisation, Decarboxylierung und Harzbildung werden mit Hilfe von solchen Verbindungen vermindert und verhindert, die die Reaktionsgeschwindigkeit beeinträchtigen. Als solche können Carbonsäuren, Dicarbonsäuren oder Anhydride, Hydroxycarbonsäuren, Ketone, Ether, Ester und Alkohole mit 1-20 Kohlenstoffatomen, oder deren Mischungen und Derivate erwähnt werden. Bevorzugt werden DL-Apfelsäure, Hydrochinon, Isopropylalkohol und Bernsteinsäuremonobutylester. Die Menge von diesen Hilfsstoffen beträgt 0,01-5 Gew.%.

Falls das Lösungsmittelgehalt der erhaltenen hellgelben-braunen Intermediäre rezirkuliert werden soll, können die Komponenten mit einem Siedepunkt unter 250 °C ausgekocht werden, und der Rückstand kann gewünschtenfalls mit Erdölraffinat, insbesondere mit 20-60 Gew.% Schmieröldestillat mit einer Viskosität von 2-15 mm$^2$/s bei 100 °C, verdünnt werden. Die Lösung der Intermediären kann gewünschtenfalls mit oder ohne 0,5-5 Gew.% Filtrierhilfsstoff filtriert werden.

Unerwarteterweise erhält man in dem zweiten Schritt der Zusatzstoffsynthese, d.h. in der Acylierung durch Umsetzung der Intermediären in Kohlenwasserstoff und/oder Ölraffinat als Lösungsmittel bei einer Temperatur von 120-235 °C, insbesondere 160-215 °C in inerter Atmosphäre, wie Stickstoffatmosphäre unter einem Druck von $1-6 \times 10^2$ kPa und in Gegenwart von 0,1-2 Gew.% Katalysator mit solchen Polyaminen, Polyalkoholen, Alkanolaminen oder deren Mischung und/oder Derivaten, welche mindestens zwei Funktionsgruppen enthalten, Zusatzstoffmischung mit Polysuccinimid- und/oder Polyester- und/oder Polyesteramid-Struktur, welche, abhängig von den verwendeten Reagentien und Molverhältnissen, mehrere Komponenten mit sich voneinander abgrenzenden verschiedenem Molgewichten enthalten.

Als polyfunktionale Polyamin werden z.B. Ethylendiamin, Diethylentriamin, Triethylentetramin, Tetraethylenpentamin, Pentaethylenhexamin und cyclisches Polyamin, wie Piperazin oder Diethylenaminopiperazin, oder deren Mischungen; als Polyalkohole Ethylenglykol, Diethylenglykol, Triethylenglykol, Tetraethylenglykol, Dipropylenglykol, Glycerin, Trimethylolpropan oder Pentaerythrit; als Aminoalkohole z.B. Ethanolamin, Diethanolamin; Triethanolamin oder deren Mischungen bevorzugt.

Da das Verhältnis der Polymeren mit verschiedenem Durchschnittsmolgewicht in dem Zusatzstoff durch die Art und Molverhältnis der Reagentien in weitem Bereich beeinflusst werden kann, können die verschiedenen Anforderungen an Motorölkompositionen durch geringe Änderung der Herstellungsbedingungen befriedigt werden. Es wurde festgestellt, daß diejenigen Zusatzstoffkompositionen eine besonders günstige Zusammensetzung zeigen, in denen das Gewichtsverhältnis von Komponenten mit höherem Molgewicht/Komponenten mit niedrigerem Molgewicht 0,01-5 beträgt. Das Durchschnittsmolgewicht der Komponenten mit niedrigerem Molgewicht beträgt höchstens das Sechsfache des Durchschnittsmolgewichts des als Ausgangsstoff verwendeten PIB. Die Acylierungsumstände werden bevorzugt so gewählt, daß bei der amid-, imid- und esterbildenden Kondensation mehrfache Verknüpfungen, d.h. Verbindungen mit Polyamid-, Polyimid- oder Polyester-Struktur, oder mit deren Kombinationen entstehen. Zu diesem Zweck wird das Molverhältnis der Bernsteinsäureanhydridgruppen der Intermediäre zu dem acylierten Reagens zwischen 0,7-5,5:1, insbesondere 1,7-4,5:1 gehalten. Um eine günstige Konversion zu sichern, wird bei der Acylierung eine Reaktionsdauer von 2-15 Stunden, und eine Konzentration der üblichen Säuren- und Basenkatalysatoren von 0,1-2 Gew.% eingehalten.

Während der Acylierung können als Katalysator saure und basische Verbindungen verwendet werden, vorzugsweise Petroleumsulfonsäure, p-Toluolsulfonsäure, Schwefelsäure, Kaliumhydroxid, Triethanolamin oder E-thanolamin, weiterhin können Ionenaustauscherharze, vorzugsweise die in $H^+$-Form verwendet werden.

Zur Polyesterbildung, die eine Variante der Acylierung ist, wird als Katalysator Petroleumsulfonsäure bevorzugt, die bisher nur bei der Herstellung von Alkenylbernsteinsäureester mit niedrigem Molgewicht (M < 3500) als esterbildender Katalysator verwendet wurde (HU-PS 205 778). Nach der Acylierung können als nachträgliche Umwandlungen Modifizierung oder Neutralisierung durchgeführt werden, die den unreagierten Säuregehalt vermindern, und/oder sonstige günstige Nebenwirkungen, wie Korrosionsverhinderung, Abriebinhibierung oder Oxidationsinhibierung sichern. Zu diesem Zweck wird der Ansatz mit, auf der Reaktionsmischung bezogen, 0,1-8 Gew.% an Modifizierungsverbindung vermischt, und bei einer Temperatur von 80-230 °C für 0,5-10 Stunden in inerter Atmosphäre gerührt.

Zur Modifizierung können die üblichen Modifizierungsverbindungen, wie elementarer Schwefel, Verbindungen mit aktivem Schwefelgehalt, Phosphorpentasulfid, Borsäure oder deren Derivate, Zinkverbindungen, wie Zinkdialkyldithiophosphat, Kupferverbindungen, wie organische Kupfersalze oder Komplexe, Molybdänoxid, organische Säuren, wie Fettsäuren, Glykolsäure, Apfelsäure, Fumarsäure, Säureamide, Alkenylsuccinimid oder deren Mischungen oder Derivate verwendet werden.

Nach der Acylierung, bzw. der Modifizierung werden die flüchtigen Komponenten aus der Reaktionsmischung bei einer Temperatur von 160-210 °C und einem Druck unter dem atmosphärischen ausgekocht, und das erhaltene Reaktionsprodukt wird gewünschtenfalls mit Schmierölraffinat verdünnt, gekühlt und mit oder ohne Filtrierhilfsstoffe filtriert.

Es sei bemerkt, daß die Wirkungen der Komponenten mit zwei verschiedenen Molgewichten wesentliche Unterschiede zeigen, wobei Zusatzstoffkompositionen mit einem höheren Gehalt an Komponenten mit niedrigerem Molgewicht eine verbesserte säureneutralisierende Wirkung und höhere belagentfernende Wirkung zeigen, während Zusatzstoffkompositionen mit einem höheren Gehalt an Komponenten mit höherem Molgewicht eine verbesserte dispersionsstabilisierende, viskositäts- und viskositätsindexerhöhende und abriebinhibierende Wirkung zeigen.

Das numerische Durchschnittsmolgewicht, erwähnt in der Definition der in der erfindungsgemässen Komposition vorhandenen Komponenten, kann aufgrund der folgenden Gleichung bestimmt werden:

$$M_n = \frac{\Sigma n_i M_i}{\Sigma n_i}$$

in welcher

$M_n$ das numerische Durchschnittsmolgewicht,
$n_i$ die Molzahl des i-ten Polymermoleküls,
$M_i$ das Molgewicht des i-ten Polymermoleküls bedeuten.

Der Grad der Polydispersität, kennzeichnend für die Verbreiterung der Molgewichtsverteilung, kann auf Grund des Verhältnisses des massenmässigen Durchschnittsmolgewichts zu dem numerischen Durchschnittsmolgewicht bestimmt werden. Das massenmässige Durchschnittsmolgewicht kann mit der folgenden Gleichung ausgedrückt werden:

$$M_m = \frac{\Sigma n_i M_i^2}{\Sigma n_i M_i}$$

in welcher

$M_m$ das massenmässige Durchschnittsmolgewicht bedeutet,

und die anderen Variablen die oben angegebene Bedeutung haben.

Die Eigenschaften der erfindungsgemässen aschefreien, detergierend-dispergierend wirkenden Zusatzstoffkomposition, deren erfindungsgemässe Herstellung und die Vorteile ihrer Anwendung werden in den folgenden Beispielen näher erläutert. Beispiele A, B, C, D, E, H, I und K beschreiben die erfindungsgemässen Intermediären und deren Herstellung, Beispiele 1-11, 17, 22, 24, 26-30 beschreiben die erfindungsgemässen Endprodukte und deren Herstellung und Beispiele F, G und J, weiterhin, 12-16, 18-21, 23 und 25 beschreiben bekannte Kompositionen und bekannte Verfahren.

### Beispiel A

In einem mit einem Rührer, Thermometer und Anschluss für die Zuleitung von Inertgas ausgerüsteten, evakuierbaren und druckbeständigen Autoklav, welcher ein Nutzvolumen von 3,0 dm³ aufweist, und an seinem oberen Teil über einen Kühler mit der Leitung eines Kondenstopfes verbunden ist, werden 1125 g (0,5 Mol) Polyisobutylen (Mn = 2250) und 1450 g Xylol vorgelegt. Man erwärmt die Mischung unter inerter Atmosphäre bis zu einer Temperatur von 126 °C, und fügt unter Rühren 98,6 g (1 Mol) Maleinsäureanhydrid mit einer Geschwindigkeit von 24,6 g/Stunde und 11,9 g di-tert.-Butylperoxid mit einer Geschwindigkeit von 1,7 g/Stunde hinzu. Nach Ablauf einer Stunde wird der Ansatz mit 30 mMol Butylalkohol vermischt. Nach Beendigung der Zugabe wird der Ansatz unter gleichen Bedingungen für 1 Stunde weitergerührt. Das Xylol und die flüchtigen unreagierten Komponenten werden durch Destillation mit einer Zeitdauer von 1,5 Stunden bei einer Temperatur von 140 °C und einem Druck von 15 kPa entfernt. Man verdünnt das Intermediär im Autoklav mit 1200 g Schmierölraffinat (Viskosität 3 mm²/s [100 °C], Viskositätsindex 90, Erstarrungspunkt -12 °C). Der Ansatz wird nach einer Homogenisierung bei einer Temperatur von 135-150 °C in Gegenwart von 3,5 Gew.% Filtrierhilfsstoff geklärt und danach filtriert. Das gelbbraune, zähflüssige, ölige Intermediär zeigt eine Säurezahl von 44,6 mg KOH/g, einen Maleinsäureanhydridgehalt von 3,1 mg/g und enthält pro PIB Molekül durchschnittlicht 1,9 Bernsteinsäureanhydridgruppen.

Die Menge von Verbindungen mit mehr als drei Bernsteinsäureanhydridgruppen pro Molekül beträgt 0,3 Gew.%. Die Erhöhung des Durchschnittsmolgewichts der Intermediäre auf Polyisobutylen bezogen beträgt 13 %.

### Beispiel B

In einem Autoklav, beschrieben im Beispiel A, werden 1125 g (0,5 Mol) Polyisobutylen mit einem Durchschnittsmolgewicht von Mn = 2250 und 350 g Aromatol (Mol Rt., ein Lösungsmittel mit hohem Aromatengehalt) vorgelegt. Man erwärmt die Mischung unter inerter Atmosphäre unter einem Druck von 5 x 10² kPa unter Rühren bis zu einer Temperatur von 139 ± 6 °C und fügt innerhalb von zwei Stunden in 7 gleichen Anteilen 11,9 g di-tert.-Butylperoxid und 1,7 g Cumolhydroperoxid, bzw. in 4 Anteilen 118,3 (1,2 Mol) Maleinsäureanhydrid, und vor der dritten MSA-Zugabe 100 mMol Bernsteinsäuremonobutylester zu. Aromatol und die flüchtigen Komponenten werden bei einer Temperatur von 155 °C und einem Druck von 12 kPa abdestilliert. Das Intermediär wird bei einer Temperatur von 140 °C unter Rühren mit SN-150/A raffiniertes Öldestillat (Mol Rt.) verdünnt. Das erhaltene unfiltrierte, verdünnte Intermediär wird mit 0,75 Gew.% Filtrierhilfsstoff geklärt und bei einer Temperatur von 110 °C filtriert. Das verdünnte und filtrierte Intermediär zeigt eine Säurezahl von 51,7 mg KOH/g, einen Maleinsäureanhydridgehalt von 3,6 mg/g und bezogen auf ein PIB Molekül einen durchschnittlichen Bernsteinsäureanhydridgehalt von 2,2. Die Menge der Verbindungen mit mehr als drei Bernsteinsäureanhydridgruppen pro Molekül beträgt 0,4 Gew.%.

### Beispiel C

In einem Autoklav, beschrieben im Beispiel A, werden 1200 g (0,5 Mol) Polypropylen und 400 g (0,35 Mol) Polyisobutenyl-Bernsteinsäureanhydrid (HU-PS 197 936) mit 0,1 kg Xylol vermischt, und die Mischung wird unter inerter Atmosphäre bei einer Temperatur von 125, 130, 135, 140, 145 und 155 ± 3 °C in 6, bzw. 7 gleichen Anteilen mit 128,2 g (1,3 Mol) Maleinsäureanhydrid, bzw. einem Gemisch von 11,9 g di-terc.-Butylperoxid und 3,4 g Cumolhydroperoxid, weiterhin vor der zweiten Initiatorzugabe mit 80 mMol DL-Apfelsäure vermischt. Das unreagierte Maleinsäureanhydrid wird bei einer Temperatur von 195 °C und einem absoluten Druck von 10 kPa entfernt, das Reaktionsprodukt wird dann mit 1450 g Schmierölraffinat nach Beispiel A vermischt, und die so erhaltene Mischung wird in Gegenwart von 2,5 Gew.% Klärmittel filtriert. Das filtrierte und verdünnte Intermediär zeigt eine Säurezahl von 50,2 mg KOH/g, einen Maleinsäureanhydridgehalt von 3,6 mg/g und bezogen auf ein PIB Molekül einen Bernsteinsäureanhydridgehalt von 2,2. Die Menge der Verbindungen mit mehr als drei Bernsteinsäureanhydridgruppen pro Molekül beträgt 10,6 Gew.%.

Beispiel D

In einem Autoklav, beschrieben im Beispiel A, werden zu 200 g Extrakt, welcher aus einer Raffination mit Furfurol entsteht und mit Schwefelsäure raffiniert und mit Diatomaerde behandelt wurde, 1100 g (0,25 Mol) Polyisobutylen unter inerter Atmosphäre und Rühren bei einer Temperatur von 150 °C zugemischt, die Mischung wird dann bei einem Druck von 2 x 10² kPa innerhalb von 2 Stunden in 5, bzw. 10 Anteilen mit 74 g Maleinsäureanhydrid und 16,2 g di-tert.-Butylperoxid, weiterhin vor der zweiten, dritten und vierten Zugabe von Maleinsäureanhydrid mit einem Gemisch von 60 mMol Bernsteinsäuremonobutylester und 40 mMol Isopropylalkohol in je 3 gleichen Anteilen vermischt. Das Maleinsäureanhydrid wird bei einer Temperatur von 205 °C und einem Druck von 15 kPa entfernt, der Rückstand wird mit 900 g Öl nach Beispiel A verdünnt und dann in Gegenwart von 2 Gew.% üblicher Filtrierhilfsstoffen filtriert. Das erhaltene, verdünnte Intermediär zeigt eine Säurezahl von 32,8 mg KOH/g, einen Maleinsäureanhydridgehalt von 2,1 mg/g und bezogen auf ein PIB Molekül einen durchschnittlichen Bernsteinsäureanhydridgehalt von 2,7. Die Menge der Verbindungen mit mehr als drei Bernsteinsäureanhydridgruppen pro Molekül beträgt 2,5 Gew.%.

Beispiel E

In einem Autoklav, beschrieben im Beispiel A, werden zu 280 g Lösungsmittel nach Beispiel B 1125 g (0,5 Mol) Polyisobutylen in inerter Atmosphäre und bei atmosphärischem Druck unter Rühren 100 mMol Hydrochinon-Reaktionsregulator, weiterhin 10,2 g di-tert.-Butylperoxid und 3,4 g Azobisisobutyronitril-Initiatoren, dann 128,2 g (1,3 Mol) Maleinsäureanhydrid zugefügt, und bei einer Temperatur von 140 °C 7 Stunden reagieren gelassen. Die Initiatoren und das Maleinsäureanhydrid werden dabei in 6 gleichen Anteilen den Reaktionsansatz zugefügt. Die unreagierten flüchtigen Komponenten werden danach bei einer Temperatur von 145 °C und einem absoluten Druck von 12 kPa innerhalb von 1,5 Stunden entfernt. Der Rückstand wird mit 1150 g Öl nach Beispiel B verdünnt und filtriert. Das erhaltene Intermediär zeigt eine Säurezahl von 54,9 mg KOH/g, einen Maleinsäureanhydridgehalt von 2,8 mg/kg und bezogen auf ein Polyisobutylenmolekül einen Bernsteinsäureanhydridgehalt von 2,3. Die Menge der Verbindungen mit mehr als drei Bernsteinsäureanhydridgruppen pro Molekül beträgt 2,0 Gew.%.

Beispiel F

In einem Autoklav, beschrieben im Beispiel A, werden 1300 g (1,0 Mol) Polyisobutylen und 350 g Xylol vorgelegt, man erwärmt die Mischung unter Rühren in inerter Atmosphäre bis zu einer Temperatur von 135 °C, und vermischt in 6 Stunden in 4, bzw. 6 gleichen Anteilen mit 216,9 g Maleinsäureanhydrid und 5,5 g di-tert.-Butylperoxid. Nach einer Destillation bei einer Temperatur von 145 °C und einem absoluten Druck von 15 kPa und einer Zeitdauer von 2 Stunden wird der Ansatz mit 1400 g Öl nach Beispiel A verdünnt, mit 3 Gew.% Klärstoff vermischt und filtriert. Das verdünnte Intermediär zeigt eine Säurezahl von 70,5 mg KOH/g, einen Maleinsäureanhydridgehalt von 3,3 mg KOH/g, und bezogen auf ein PIB Molekül einen durchschnittlichen Bernsteinsäureanhydridgehalt von 1,7. Die Menge der Verbindungen mit mehr als drei Bernsteinsäureanhydridgruppen pro Molekül beträgt 41,0 Gew.%. Die Erhöhung des Durchschnittsmolgewichts des Intermediärs bezogen auf Polyisobutylen beträgt 110 %.

Beispiel G

In einem Autoklav, beschrieben im Beispiel A, werden 1125 g (0,5 Mol) Polyisobutylen und 350 g Xylol vorgelegt. Man erwärmt die Mischung unter Rühren in inerter Atmosphäre und bei atmosphärischem Druck bis zu einer Temperatur von 145 °C. Der Mischung wird innerhalb von 6 Stunden 98,6 g Maleinsäureanhydrid, weiterhin 1,9 g Cumolhydroperoxid und 3,4 g di-tert.-Butylperoxid in 4, bzw. 7 gleichen Anteilen zugefügt. Die unreagierten flüchtigen Komponenten werden bei einer Temperatur von 150 °C und einem Druck von 15 kPa und einer Zeitdauer von 1 Stunde abdestilliert. Das erhaltene Intermediär wird mit 1150 g Öl nach Beispiel A verdünnt und in Gegenwart von 3 Gew.% Filtrierhilfsstoff filtriert. Das verdünnte und filtrierte Intermediär zeigt eine Säurezahl von 43,4 mg KOH/g, einen Maleinsäureanhydridgehalt von 2,5 mg/g, und bezogen auf ein PIB Molekül einen Bernsteinsäureanhydridgehalt von 1,8. Die Menge der Verbindungen mit mehr als drei Bernsteinsäureanhydridgruppen pro Molekül beträgt 34,0 Gew.%.

Beispiel H

In einem Autoklav, beschrieben im Beispiel A, werden 1425 g (1,5 Mol) Polyisobutylen und 480 g Xylol vorgelegt. Man erwärmt die Mischung in inerter Atmosphäre unter atmosphärischem Druck und Rühren bis zu einer Temperatur von 138 °C. Bei dieser Temperatur wird der Mischung pro Stunde 88,7 g Maleinsäureanhydrid in 4 Anteilen und 0,9 g di-tert.-Butylperoxid in 7 Anteilen zugefügt. Als Reaktionsregulator werden 20 mMol Isopropylalkohol und 5 mMol DL-Apfelsäure in 2 Anteilen nach der ersten und zweiten Zugabe von Maleinsäureanhydrid zugefügt. Nach der dritten Zugabe von Maleinsäureanhydrid wird der Druck des Reaktionsraumes auf einen Wert von 2 x 10$^2$ kPa erhöht. Danach werden die unreagierten flüchtigen Komponenten aus dem Reaktionsansatz bei einer Temperatur von 140 °C und einem Druck von 15 kPa innerhalb von 1,5 Stunden abdestilliert. Das erhaltene Intermediär wird mit 840 g Öl nach Beispiel B verdünnt, und unter Verwendung von 5 Gew.% Filtrierhilfsstoff filtriert. Das verdünnte und filtrierte Intermediär zeigt eine Säurezahl von 139,9 mg KOH/g, einen Maleinsäureanhydridgehalt von 3,8 mg/g und bezogen auf ein PIB Molekül einen durchschnittlichen Bernsteinsäureanhydridgehalt von 2,7. Die Menge der Verbindungen mit mehr als drei Bernsteinsäureanhydridgruppen pro Molekül beträgt 1,7 Gew.%.

Beispiel I

In einem Autoklav, beschrieben im Beispiel A, werden zu einer Mischung von 280 g (0,8 Mol) Isobutylen/ Butadien Copolymer und 550 g Lösungsmittel nach Beispiel B bei einer Temperatur von 137 °C unter inerter Atmosphäre in geschlossenem System innerhalb von 4 Stunden 157,8 g MSA und ebenfalls innerhalb von 4 Stunden in 5 Anteilen Cumolhydroperoxid und 19,4 g di-tert.-Butylperoxid, weiterhin nach der ersten, zweiten und dritten Zugabe von Maleinsäureanhydrid 24 mMol Hydrochinon und 6 mMol Bernsteinsäuremonobutylester in 3 gleichen Anteilen zugefügt. Danach werden die unreagierten flüchtigen Komponenten aus dem Reaktionsansatz bei einer Temperatur von 145 °C und einem Druck von 15 kPa innerhalb von 1,5 Stunden entfernt, und das erhaltene Intermediär wird mit 1380 g Öl nach Beispiel A verdünnt, und in Gegenwart von Filtrierhilfsstoffen geklärt und filtriert. Das verdünnte und filtrierte Intermediär zeigt eine Säurezahl von 82,4 mg KOH/g, einen Maleinsäureanhydridgehalt von 3,2 mg/g und einen durchschnittlichen Bernsteinsäureanhydridgehalt pro Molekül von 2,5. Die Menge der Verbindungen mit mehr als drei Bernsteinsäureanhydridgruppen pro Molekül beträgt 4,6 Gew.%.

Beispiel J

In einem Autoklav, beschrieben im Beispiel A, werden 2150 g (0,5 Mol) Polyisobutylen und 400 g Xylol vorgelegt. Zu dieser Mischung fügt man unter inerter Atmosphäre und bei einem Druck von 3,5 x 10$^2$ kPa 197,2 Maleinsäureanhydrid, 18,0 g di-tert.-Butylperoxid und 15 mMol Bernsteinsäuremonobutylester hinzu, und die Addition wird bei einer Temperatur von 178 °C 7 Stunden fortgesetzt. Nach der Entfernung der flüchtigen Komponenten nach Beispiel I und der Verdünnung mit 800 g Öl nach Beispiel B und Filtrierung erhält man ein Intermediär mit einer Säurezahl von 50,9 mg KOH/g, mit einem Maleinsäureanhydridgehalt von 18,4 mg/g und einem durchschnittlichen Bernsteinsäureanhydridgehalt pro Molekül von 2,2. Die Menge der Verbindungen mit mehr als drei Bernsteinsäureanhydridgruppen pro Molekül beträgt 16,6 Gew.%.

Beispiel K

In einem Autoklav, beschrieben im Beispiel A, wird in 500 g Mischung von Xylol und Öl nach Beispiel B mit einem Volumenverhältnis von 40:60 1200 g selektiv hydriertes Isobutylen/Butadien Copolymer gelöst und auf eine Temperatur von 150 °C erwärmt. Innerhalb von 5 Stunden werden in 3 gleichen Anteilen 138 g Maleinsäureanhydrid, in 5 gleichen Anteilen 13,8 g di-tert.--Butylperoxid-Initiator und in 4 gleichen Anteilen 50 g Isopropylalkohol-Reaktionsregulator zugefügt. Der Ansatz wird bei einem Druck von 4,3 x 10$^2$ kPa reagieren gelassen, danach auf einen Druck von 10 kPa und eine Temperatur von 135 °C eingestellt, und unter diesen Umständen von Xylol und sonstigen flüchtigen Komponenten befreit. Der Rückstand wird mit 750 g Verdünnungsöl nach Beispiel I verdünnt und in Gegenwart von 4 Gew.% Filtrierhilfsstoff filtriert. Das erhaltene Intermediär zeigt eine Säurezahl von 58,1 mg KOH/g, einen Maleinsäureanhydridgehalt von 2,9 mg/g und einen Bernsteinsäuregehalt pro Molekül von 2,6. Die Menge der Verbindungen mit mehr als drei Bernsteinsäureanhydridgruppen pro Molekül beträgt 3,7 Gew.%.

Beispiel I

In einem Autoklav, ausgerüstet mit einem Rührer, einer Zuführanlage, einem Kondensator, einer Probeentnahmeeinrichtung, einem Anschluss für die Stickstoffzuführung, einem Thermometer und einem Manometer, werden 503 g (200 mMol) Intermediär nach Beispiel A vorgelegt, und bei einer Temperatur von 40 °C mit 9,45 g (50 mMol) Tetraethylenpentamin und als konversionserhöhender Katalysator mit 0,1 Gew.% Triethanolamin vermischt. Der Ansatz wird in inerter Atmosphäre und unter atmosphärischem Druck und Rühren bis zu einer Temperatur von 175-180 °C erwärmt, und unter dieser Temperatur 5 Stunden acyliert. Der Ansatz wird danach mit 2,06 g (200 mMol) Diethylentriamin vermischt, und bei einer Temperatur von 185 °C und einem Druck von 50, 30 und 10 kPa für je 1 weitere Stunde gerührt. Das Endprodukt zeigt einen Stickstoffgehalt von 0,83 Gew.%, das Verhältnis von Komponenten mit höherem Molgewicht zu denen mit niedrigerem Molgewicht beträgt 0,33.

## Beispiel 2

Man geht wie bei Beispiel 1 vor, jedoch mit dem Unterschied, daß die Acylierung statt mit Tetraethylenpentamin in Gegenwart von 6,18 g (60 mMol) Diethylentriamin und ohne nachträgliche Modifizierung durchgeführt wird. In den letzten 3 Stunden der Acylierung wird der Druck auf einen Wert von 300 kPa, und 1 weitere Stunde lang auf 10 kPa gestellt. Nach einer Filtrierung in Gegenwart von 1 Gew.% Filtrierhilfsstoff zeigt das erhaltene Endprodukt einen Stickstoffgehalt von 0,49 Gew.%, das Verhältnis der Komponenten mit höherem Molgewicht zu denen mit niedrigerem Molgewicht beträgt 3,0.

## Beispiel 3

Die Zusatzstoffkomposition wird analog Beispiel 2 hergestellt, jedoch mit dem Unterschied, daß das Diethylentriamin (8,24 g, 80 mMol) und Triethanolamin (0,05 mMol) zu dem Acylierungsreagens in zwei Teilen, zu Beginn der Reaktion und bei halber Zeitdauer zugefügt werden. Der Ansatz wird auf eine Temperatur von 120 °C gekühlt, und mit 0,93 mMol Borsäure vermischt. Man rührt den Ansatz bei einer Temperatur von 180 °C und einem Druck von 1,5 x $10^2$ kPa 2 Stunden lang, und filtriert in Gegenwart von 1,5 Gew.% Filtrierhilfsstoff. Das Endprodukt zeigt einen Stickstoffgehalt von 0,65 Gew.%, und das Verhältnis von Komponenten mit höherem Molgewicht zu denen mit niedrigerem Molgewicht beträgt 2,1.

## Beispiel 4

In einem Autoklav, beschrieben im Beispiel 1, werden 503 g (200 mMol) Intermediär nach Beispiel A vorgelegt, und zuerst bei Zimmertemperatur, danach bei einer Temperatur von 140 °C mit 2,06 g (20 mMol) Diethylentriamin, bzw. 5,84 g (40 mMol) Triethylentetramin und 3,7 g (40 mMol) Glycerin, weiterhin 0,05 mMol Schwefelsäure vermischt. Die Acylierung wird in inerter Atmosphäre unter Rühren bei einem Druck von 50 kPa 4 Stunden lang durchgeführt, wobei die Temperatur mit einer Geschwindigkeit von 20 °C pro Stunde bis auf einen Wert von 190 °C erhöht wird. Danach wird der Ansatz zur Modifizierung mit 6 mMol Chromsulfid vermischt, und bei einer Temperatur von 195 °C und einem Druck von 2 x $10^2$ kPa 3 Stunden reagieren gelassen. Der Ansatz wird in Gegenwart von 1 Gew.% Filtrierhilfsstoff bei einer Temperatur von 120 °C filtriert. Das Endprodukt zeigt einen Stickstoffgehalt von 0,59 Gew.%, das Verhältnis von Komponenten mit höherem Molgewicht zu denen mit niedrigerem Molgewicht beträgt 1,0.

## Beispiel 5

In einem Autoklav, beschrieben im Beispiel 1, werden 434 g (200 mMol) Intermediär nach Beispiel B vorgelegt, und bei Zimmertemperatur mit 0,6 g (10 mMol) Ethylendiamin, bei einer Temperatur von 80 °C mit 7,56 g (40 mMol) Tetraethylenpentamin und bei einer Temperatur von 140 °C mit 0,1 Gew.% Schwefelsäure und 2,76 g (30 mMol) Glycerin bei atmosphärischem Druck und unter Stickstoffatmosphäre vermischt, und bei einer Temperatur von 200 °C 9 Stunden lang reagieren gelassen. Die Temperatur wird in dieser Phase der Synthese mit einer Geschwindigkeit von etwa 30 °C pro Stunde erhöht. Danach wird der Ansatz auf eine Temperatur von 120 °C gekühlt, mit 10 mMol Kupferacetat vermischt, und bei einer Temperatur von 175 °C 3 Stunden lang unter einem Druck von 2,5 x $10^2$ kPa, schliesslich 10 kPa modifiziert. Das filtrierte Endprodukt zeigt einen Stickstoffgehalt von 0,7 Gew.%, das Verhältnis von Komponenten mit höherem Molgewicht zu denen mit niedrigerem Molgewicht beträgt 0,18.

## Beispiel 6

In einem Autoklav, beschrieben im Beispiel 1, werden 434 g (200 mMol) Intermediär nach Beispiel A in Gegenwart von 0,2 Gew.% Petroleumsulfonsäure als konversionserhöhende Katalysator mit 7,37 g (80 mMol) Glycerin in zwei Anteilen bei Zimmertemperatur und bei einer Temperatur von 130 °C vermischt, und in inerter Atmosphäre bei einer Temperatur von 210 °C und einem Druck von 4 x $10^2$ kPa 4 Stunden lang, bzw. bei 10 kPa 3,5 Stunden lang acyliert. Der Ansatz wird danach auf eine Temperatur von 120 °C gekühlt, mit 6,18 g (60 mMol) Diethylentriamin vermischt, und bei einer Temperatur von 155 °C und einem Druck von 65 kPa 1 Stunde lang, dann bei einer Temperatur von 185 °C und einem Druck von 15 kPa 2 Stunden lang gerührt. Das Endprodukt, filtriert in Gegenwart von 1 Gew.% Filtrierhilfsstoff, zeigt einen Stickstoffgehalt von 0,55 Gew.%, das Verhältnis von Komponenten mit höherem Molgewicht zu denen mit niedrigerem Molgewicht beträgt 0,8.

## Beispiel 7

In einem Autoklav, beschrieben im Beispiel 1, werden 434 g (20 mMol) Intermediär nach Beispiel E in inerter Atmosphäre unter Luftdruck und Rühren mit 1,03 g (10 mMol) Diethylentriamin bei einer Temperatur von 85 °C und einer Zeitdauer von etwa 10 Minuten, und danach mit 10,5 g (100 mMol) Diethanolamin bei einer Temperatur von 110 °C und einer Zeitdauer von 30 Minuten, und schliesslich mit 6,84 g (90 mMol) Diethylenglykol bei einer Temperatur von 130 °C und einer Zeitdauer von 20 Minuten vermischt. Man gibt zu dem Ansatz 27,2 g (200 mMol) Pentaerythrit, erwärmt mit einer Geschwindigkeit von 30 °C pro Stunde bis auf eine Temperatur von 180 °C und bis auf einen Druck von 5 x 10² kPa. Unter diesen Umständen acyliert man 3 Stunden lang. Das Endprodukt, erhalten nach einer Filtrierung in Gegenwart von 1 Gew.% Klärungsmittel, zeigt einen Stickstoffgehalt von 0,4 Gew.%. Im Produkt können Komponenten mit höherem und niedrigerem Molgewicht nicht unterschieden werden.

Beispiel 8

In einem Autoklav, beschrieben im Beispiel 1, werden 434 g (200 mMol) Intermediär nach Beispiel B mit 464 g (45 mMol) Diethylentriamin in inerter Atmosphäre, bei Zimmertemperatur und in Gegenwart von 2,0 g Ethanolamin unter Rühren vermischt. Nach einer Reaktion bei einer Temperatur von 170 °C und einer Zeitdauer von 2 Stunden wird 1,36 g (10 mMol) Pentaerythrit zugefügt, und bei einem Druck von 15 kPa 2 Stunden weiter reagieren gelassen. Der Ansatz wird auf eine Temperatur von 100 °C gekühlt, mit 5 mMol Schwefel vermischt, und bei einer Temperatur von 180 °C und einem Druck von 6 x 10² kPa 3 Stunden lang weitergerührt. Der Ansatz wird danach in Gegenwart von 0,5 Gew.% Hilfsstoff filtriert. Das Produkt zeigt einen Stickstoffgehalt von 0,41 Gew.%, das Verhältnis von Komponenten mit höherem Molgewicht zu denen mit niedrigerem Molgewicht beträgt 2,3.

Beispiel 9

In einem Autoklav, beschrieben in dem vorigen Beispiel, werden 434 g (200 mMol) Intermediär nach Beispiel B bei Zimmertemperatur zuerst mit 1,52 g (15 mMol) Diethylentriamin, dann mit 1,46 g (10 mMol) Triethylentetramin vermischt. Danach fügt man 4 g Amberlist 15 Ionaustauscherharz in H⁺-Form zu dem Ansatz und erwärmt diesen in inerter Atmosphäre unter Rühren bis auf eine Temperatur von 125 °C. Danach werden 6,8 g (50 mMol) Pentaerythrit zugefügt, und bei einer Temperatur von 205 °C 6 Stunden lang bei einem Druck von 2 x 10² kPa, danach 2 Stunden lang bei einem Druck von 20 kPa gerührt. Der Ansatz wird auf eine Temperatur von 140 °C gekühlt, mit 50 mMol Molybdänoxid vermischt, und bei einer Temperatur von 195 °C und einem Druck von 2 x 10² kPa 2 Stunden reagieren gelassen. Nach einer Filtrierung in Gegenwart von 1,5 Gew.% Filtrierhilfsstoff zeigt das Endprodukt einen Stickstoffgehalt von 0,25 Gew.%, das Verhältnis der Komponenten mit höherem Molgewicht zu denen mit niedrigerem Molgewicht beträgt 0,05.

Beispiel 10

In einem Autoklav, beschrieben im Beispiel 1, werden 0,47 g (200 mMol) Intermediär nach Beispiel C vorgelegt. Dazu fügt man in inerter Atmosphäre, unter Rühren und atmosphärischen Umständen und in Gegenwart von 0,2 Gew.% Petroleumsulfonsäure als konversionserhöhender Katalysator bei einer Temperatur von 30 °C 1,49 g (10 mMol) Triethanolamin, bei einer Temperatur von 125 °C 3,8 g (50 mMol) Diethylenglykol und bei einer Temperatur von 140 °C 9,45 g (70 mMol) Trimethylolpropan. Zu diesem Zweck wird die Temperatur mit einer Geschwindigkeit von 40 °C pro Stunde erhöht. Der Ansatz wird bei einer Temperatur von 198 °C bei atmosphärischem Druck 5 Stunden lang, danach bei einem Druck von 15 kPa 2 Stunden lang gerührt. Nach einer Filtrierung in Gegenwart von 1 Gew.% Filtrierhilfsstoff zeigt das Endprodukt einen Stickstoffgehalt von 0,03 Gew.% (300 ppm), das Verhältnis der Komponenten mit höherem Molgewicht zu denen mit niedrigerem Molgewicht beträgt 0,1.

Beispiel 11

In einem Autoklav, beschrieben im Beispiel 1, werden 513,1 g (150 mMol) Intermediär nach Beispiel D mit 7,56 g (40 mMol) Tetraethylenpentamin in inerter Atmosphäre etwa 1,5 Stunden lang reagieren gelassen, wobei der Ansatz mit einer Geschwindigkeit von 80 °C pro Stunde erwärmt wurde. Die Acylierung wird bei einer Temperatur von 175 °C und einer Zeitdauer von 4 Stunden bei atmosphärischen Druck, und danach für eine Zeitdauer von 1 Stunde bei einem Druck von 50 kPa durchgeführt. Der Ansatz wird bei einer Temperatur von 120 °C mit 2,06 g (20 mMol) Diethylentriamin vermischt, und bei einer Temperatur von 185 °C und einem Druck von 5 x 10² kPa 3 Stunden und bei einem Druck von 10 kPa 2 Stunden gerührt. Das filtrierte Endprodukt zeigt einen Stickstoffgehalt von 0,68 Gew.%, und das Verhältnis der Komponenten mit höherem Molgewicht zu denen mit niedrigerem Molgewicht beträgt 5,0.

### Beispiel 12

In einem Autoklav, beschrieben im Beispiel 1, werden 408,7 g (200 mMol) Intermediär nach Beispiel E in inerter Atmosphäre bei Zimmertemperatur und unter Rühren zuerst mit 0,6 g Ethylendiamin für eine Zeitdauer von 30 Minuten reagieren gelassen, danach bei einer Temperatur von 85 °C in Gegenwart von 0,5 Gew.% Petroleumsulfonsäure-Katalysator mit einem Gemisch von 9,0 g (60 mMol) Triethylenglykol und 1,38 g (15 mMol) Glycerin vermischt. Der Ansatz wird bei einer Temperatur von 200 °C 4 Stunden lang bei atmosphärischem Druck, und 4 Stunden lang bei einem Druck von 40 kPa acyliert, danach bei einer Temperatur von 110 °C mit 5 mMol Kupferacetat vermischt. Die Modifizierung wird bei einer Temperatur 190 °C, einem Druck von $3 \times 10^2$ kPa für eine Zeitdauer von 3 Stunden durchgeführt. Der Ansatz wird in Gegenwart von 1 Gew.% Filtrierhilfsstoff filtriert. Das Endprodukt zeigt einen Stickstoffgehalt von 0,06 Gew.%, und einen Gehalt an Komponenten mit niedrigerem Molgewicht von 97 Gew.% und an Komponenten mit höherem Molgewicht von 3 Gew.%.

### Beispiel 13

In einem Autoklav, beschrieben im Beispiel 1, werden 477,5 g (300 mMol) Intermediär nach Beispiel F vorgelegt. Man fügt in inerter Atmosphäre und unter Rühren bei Zimmertemperatur 5,15 g (50 mMol) Diethylentriamin, bei einer Temperatur von 70 °C 9,45 g (50 mMol) Tetraethylenpentamin zu, und lässt bei einer Temperatur von 130 °C 2 Stunden reagieren. Danach tropft man weitere 5,15 g (50 mMol) Diethylentriamin und 9,45 g (500 mMol) Tetraethylenpentamin zu. Der Ansatz wird bei einer Temperatur von 190 °C 4 Stunden unter atmosphärischen Umständen reagieren gelassen, in Gegenwart von 1 Gew.% Filtrierhilfsstoff geklärt, und bei einer Temperatur von 120 °C filtriert. Das Endprodukt zeigt einen Stickstoffgehalt von 2,2 Gew.%, und eine homogene Molgewichtsverteilung, d.h. Komponenten mit niedrigerem und höherem Molgewicht können nicht gesondert bestimmt werden.

### Beispiel 14

Man vermischt 477,5 g (300 mMol) Intermediär nach Beispiel F in inerter Atmosphäre, unter Rühren und in Gegenwart von 1 Gew.% Petroleumsulfonsäure bei einer Temperatur von 110 °C mit 3,7 g (40 mMol) Glycerin, und nach Ablauf von 1 Stunde mit 10,2 g (75 mMol) Pentaerythrit und erwärmt den Ansatz bis auf eine Temperatur von 150 °C. Man fügt weitere 56,6 g einer Glycerin/Pentaerythrit Mischung (40 mMol Glycerin und 35 mMol Pentaerythrit) zu, und acyliert bei einer Temperatur von 205 °C, einem Druck von $2 \times 10^2$ kPa für eine Zeitdauer von 8 Stunden. Danach gibt man zu dem Ansatz 1,89 g (10 mMol) Tetraethylenpentamin und rührt den Ansatz bei atmosphärischem Druck und bei einer Temperatur von 180 °C 3 Stunden lang. Das erhaltene Endprodukt ist schlecht filtrierbar, zeigt einen Stickstoffgehalt von 0,08 Gew.% und ist in Grundöl nur teilweise löslich.

### Beispiel 15

In einem Autoklav, beschrieben im Beispiel 1, werden 517,1 g Intermediär nach Beispiel G in inerter Atmosphäre bei Zimmertemperatur und atmosphärischem Druck unter ständigem Rühren mit 4,4 g (30 mMol) Triethylentetramin und 5 mMol Triethanolamin vermischt. Der Ansatz wird bei einer Temperatur von 220 °C 4 Stunden lang gerührt, dann mit 5,3 g (70 mMol) Diethylenglykol vermischt, und bei einer Temperatur von 240 °C und atmosphärischem Druck weitere 3 Stunden acyliert. Der Ansatz wird bei einer Temperatur von 190 °C mit 5 mMol Schwefel 3 Stunden reagieren gelassen, dann in Gegenwart von 1 Gew.% Filtrierhilfsstoff filtriert. Das Endprodukt zeigt einen Stickstoffgehalt von 0,22 Gew.%, und eine homogene Molgewichtverteilung, d.h. Komponenten mit niedrigerem und höherem Molgewicht können nicht gesondert bestimmt werden.

### Beispiel 16

In einem Autoklav, beschrieben im Beispiel 1, werden 517,1 g (200 mMol) Intermediär nach Beispiel B in Gegenwart von 10 mMol Schwefelsäure als konversionserhöhender Katalysator bei Zimmertemperatur und atmosphärischem Druck unter ständigem Rühren mit 1,55 g (15 mMol) Diethylentriamin vermischt und bei einer Temperatur von 190 °C und einem Druck von $15 \times 10^2$ kPa 6 Stunden lang acyliert. Man fügt danach 1,9 g (10 mMol) Tetraethylenpentamin zu, und rührt den Ansatz bei einer Temperatur von 215 °C und einem Druck von $10^3$ kPa 2 Stunden lang. Das Endprodukt, filtriert bei einer Temperatur von 120 °C und in Gegenwart von 1 Gew.% Filtrierhilfsstoff, zeigt einen Stickstoffgehalt von 0,36 Gew.%, das Verhältnis der Komponenten mit höherem Molgewicht zu denen mit niedrigerem Molgewicht beträgt 0,25.

Beispiel 17

In einem Autoklav, beschrieben im Beispiel 1, werden 320,8 g (400 mMol) Intermediär nach Beispiel H in inerter Atmosphäre mit 10,3 g (100 mMol) Diethylentriamin vermischt und bei einer Temperatur von 120 °C 1 Stunde lang reagieren gelassen. Danach fügt man 1,0 Gew.% Petroleumsulfonsäure und 2,76 g (30 mMol) Glycerin zu, und rührt den Ansatz bei einer Temperatur von 180 °C und einem Druck von 6 x 10$^2$ kPa 6 Stunden lang. Die Acylierung wird bei einer Temperatur von 190 °C und einem Druck von 10 kPa weitergeführt, schliesslich fügt man bei einer Temperatur von 130 °C 2,5 g (40 mMol) Borsäure zu, und modifiziert bei einer Temperatur von 175 °C und bei atmosphärischem Druck 8 Stunden lang. Nach einer Filtrierung in Gegenwart von 1 Gew.% Filtrierhilfsstoff erhält man das Endprodukt mit einem Stickstoffgehalt von 1,05 Gew.%, das Verhältnis der Komponenten mit höherem Molgewicht zu denen mit niedrigerem Molgewicht beträgt 1,8.

Beispiel 18

In einem Autoklav, beschrieben im Beispiel 1, werden 320,8 g (400 mMol) Intermediär nach Beispiel H vorgelegt, in Stickstoffatmosphäre, bei Zimmertemperatur und unter ständigem Rühren mit 10,3 g (100 mMol) Diethylentriamin, danach bei einer Temperatur von 120 °C mit 37,8 g (200 mMol) Tetraethylenpentamin vermischt, und bei einer Temperatur von 250 °C 2 Stunden lang acyliert. Man fügt dem Ansatz 13,6 g (100 mMol) Pentaerythrit und 1,4 g Petroleumsulfonsäure als konversionserhöhender Katalysator zu, läßt 3 Stunden lang bei einem Druck von 15 kPa reagieren, und filtriert das Endprodukt in Gegenwart von 3 Gew.% Filtrierhilfsstoff. Das schlecht filtrierbares Endprodukt ist in Grundöl schwer löslich.

Beispiel 19

Einem Intermediär der Art und Menge wie im vorigen Beispiel beschrieben werden innerhalb von 2 Stunden 27,3 g (200 mMol) Pentaerythrit und 15 g Petroleumsulfonsäure in 4 gleichen Anteilen bei einer Temperatur von 110 °C in inerter Atmosphäre und unter ständigem Rühren zugefügt. Den Ansatz lässt man bei einer Temperatur von 110 °C und einem Druck von 1,5 x 10$^2$ kPa 9 Stunden, und bei einem Druck von 15 kPa weitere 1 Stunde lang acylieren. Der Ansatz wird in Gegenwart von 2 Gew.% Klärstoff bei einer Temperatur von 100 °C 0,5 Stunde abgeklärt und filtriert. Das erhaltene Endprodukt ist in Grundöl schwer löslich.

Beispiel 20

In einem Autoklav, beschrieben im Beispiel 1, werden 408,5 g (300 mMol) Intermediär nach Beispiel 1 bei einer Temperatur von 50-150 °C in 4 gleichen Anteilen mit 10,6 g einer Mischung von Glycerin/Pentaerythrit mit einem Molverhältnis von 1:1 und mit 0,8 Gew.% Petroleumsulfonsäure als Katalysator vermischt, und bei einem Druck von 50 kPa und einer Temperatur von 195 °C 7 Stunden lang acyliert. Der Ansatz wird auf eine Temperatur von 120 °C gekühlt, innerhalb von 0,3 Stunden mit 3,1 g (30 mMol) Diethylentriamin vermischt, und bei einer Temperatur von 170 °C zuerst bei einem Druck von 4 x 10$^2$ kPa, dann 15 kPa 1 Stunde lang gerührt. Das filtrierte Endprodukt zeigt einen Stickstoffgehalt von 0,28 Gew.%, das Verhältnis der Komponenten mit höherem Molgewicht zu denen mit niedrigerem Molgewicht beträgt 0,2.

Beispiel 21

Von dem Intermediär nach Beispiel J, welches einen hohen Gehalt an freiem Maleinsäureanhydrid und an Verbindungen mit mehr als drei Bernsteinsäureanhydridgruppen pro Molekül zeigt, werden 440,9 g (200 mMol) in einem Autoklav, beschrieben im Beispiel 1, vorgelegt, mit 1,5 g Kaliumhydroxid vermischt, und dann in inerter Atmosphäre unter atmosphärischen Umständen und ständigem Rühren bei Zimmertemperatur in Zeitabständen von je 1 Stunde mit 18,9 g (100 mMol) Tetraethylenpentamin, 4,5 g (30 mMol) Triethanolamin, 3,0 g (20 mMol) Triethylenglykol und 13,6 g (100 mMol) Pentaerythrit vermischt, wobei der Ansatz mit einer Geschwindigkeit von 40 °C pro Stunde erwärmt wird. Nach der Zugabe der Reagentien wird der Ansatz bei einer Temperatur von 210 °C und einem Druck von 2 x 10$^2$ kPa 4 Stunden lang acyliert. Nach einer Filtrierung in Gegenwart von 2 Gew.% Filtrierhilfsstoff ist das erhaltene Endprodukt sogar in kleinen Konzentrationen in Grundöl nur schwer löslich.

Beispiel 22

In einem Autoklav, beschrieben im Beispiel 1, werden 386,2 g (200 mMol) Intermediär nach Beispiel J vorgelegt und bei atmosphärischem Druck in inerter Atmosphäre bei einer Temperatur von 40 °C mit 7,3 g (50 mMol) Diethylentriamin und dann bei einer Temperatur von 160 °C mit 1,84 g (20 mMol) Trimethylolpropan und 4,0 g Amberliste-15 als konversionserhöhender Katalysator vermischt. Der Ansatz wird unter ständigem Rühren bei einem Druck von 50 kPa bis zu einer Temperatur von 175 °C erwärmt und 5 Stunden lang gerührt. Danach wird der Ansatz auf eine Temperatur von 120 °C gekühlt, mit 21,6 g (15 mMol) Molybdänoxyd ($MoO_3$) vermischt, und bei einer Temperatur von 185 °C und atmosphärischem Druck 3 Stunden lang modifiziert. Nach einer Filtrierung in Gegenwart von 1,5 Gew.% Filtrierhilfsstoff zeigt das Endprodukt einen Stickstoffgehalt von 0,63 Gew.%, das Verhältnis der Komponenten mit höherem Molgewicht zu denen mit niedrigerem Molgewicht beträgt 0,8.

Beispiel 23

Zu dem Intermediär der Art und Menge wie im vorigen Beispiel beschrieben fügt man in inerter Atmosphäre bei atmosphärischem Druck und unter ständigem Rühren bei einer Temperatur von 80 °C und einer Erwärmung von 80 °C pro Stunde innerhalb von 0,5 Stunde 3,78 g (20 mMol) Tetraethylenpentamin zu. Dem Ansatz wird zuerst 1,0 g Schwefelsäure, dann 1,5 g (10 mMol) Triethylenglykol tropfenweise zugefügt, und bei einer Temperatur von 180 °C und atmosphärischem Druck wird 6 Stunden lang acyliert. Das filtrierte Endprodukt zeigt einen Stickstoffgehalt von 0,32 Gew.%, und eine homogene Molgewichtsverteilung, d.h. Komponenten mit verschiedenen Molgewichten können praktisch nicht bestimmt werden.

Beispiel 24

Zu dem Intermediär der Art und Menge wie im Beispiel 22 beschrieben fügt man 0,8 Gew.% Petroleumsulfonsäure als esterifizierender Katalysator bei einer Temperatur von 120 °C innerhalb von 0,5 Stunde 3,7 g (40 mMol) Glycerin und 1,05 g (10 mMol) Diethanolamin zu. Der Ansatz wird in inerter Atmosphäre bei einer Temperatur von 190 °C und einem Druck von 50 kPa 5 Stunden lang gerührt, dann bei einer Temperatur von 120 °C mit 5,7 g (30 mMol) Tetraethylenpentamin vermischt, und schliesslich bei einer Temperatur von 175 °C und einem Druck von $5 \times 10^2$ kPa 3 Stunden lang und dann bei einem Druck von 10 kPa 1 Stunde lang acyliert. Das filtrierte Endprodukt zeigt einen Stickstoffgehalt von 0,53 Gew.%, und einen Gehalt an Komponenten mit höherem Molgewicht von 2 Gew.%.

Beispiel 25

Man fügt dem Intermediär der Art und Menge wie im Beispiel 22 beschrieben in Gegenwart von 1,2 g Schwefelsäure als Katalysator und bei einer Temperatur von 110 °C 40,8 g (300 mMol) Pentaerythrit zu, und lässt unter ständigem Rühren bei einer Temperatur von 195 °C und einem Druck von $3 \times 10^2$ kPa 2 Studen lang und bei einem Druck von 10 kPa 1,5 Studen lang reagieren. Das filtrierte Endprodukt ist in Grundöl schwer löslich.

Beispiel 26

Man fügt dem Intermediär der Art und Menge wie im Beispiel 22 beschrieben in inerter Atmosphäre und bei einer Temperatur von 60 °C und atmosphärischem Druck 1,2 g (20 mMol) Ethylendiamin und 2,06 g (20 mMol) Diethylentriamin innerhalb von 0,5 Stunden und ständigem Rühren zu. Der Ansatz wird bei einer Temperatur von 185 °C und einem Druck von $5 \times 10^2$ kPa 2,5 Stunden lang reagieren gelassen, dann mit 3,54 g Mischung von Glycerin/Trimethylolpropan mit einem Molverhältnis von 1:1 vermischt, und in Gegenwart von 0,5 Gew.% Petroleumsulfonsäure 3 Stunden lang wie vor acyliert. Die Reaktion wird durch Kochen bei einem Druck von 10 kPa in weiteren 1,5 Stunden beendigt. Das erhaltene Produkt wird bei einer Temperatur von 110 °C mit 20 mMol Schwefel vermischt und bei einer Temperatur von 190 °C für eine Zeitdauer von 2 Stunden modifiziert. Das filtrierte Endprodukt zeigt einen Stickstoffgehalt von 0,32 Gew.%, das Verhältnis der Komponenten mit höherem Molgewicht zu denen mit niedrigerem Molgewicht beträgt 0,4.

Beispiel 27

In einem Autoklav, beschrieben im Beispiel 1, werden 386,2 g (200 mMol) Intermediär nach Beispiel K vorgelegt, und in inerter Atmosphäre bei atmosphärischem Druck und einer Temperatur von 70 °C unter ständigem Rühren mit 8,76 g (60 mMol) Triethylentetramin und 3 g Monoethanolamin vermischt. Der Ansatz wird bei einer Temperatur von 175 °C und einem Druck von 50 kPa 4 Stunden lang acyliert, dann bei einer Temperatur von 120 °C innerhalb von 10 Minuten tropfenweise mit 25 g (etwa 10 mMol) Monosuccinimid-Derivat (Komad-303, Mol Rt.) vermischt. Man lässt bei einer Temperatur von 170 °C 3 Stunden lang bei einem Druck von $2 \times 10^2$ kPa und 1,5 Stunden lang bei einem Druck von 15 kPa reagieren. Das filtrierte Endprodukt zeigt einen Stickstoffgehalt von 0,83 Gew.%, das Verhältnis der Komponenten mit höherem Molgewicht zu denen mit niedrigerem Molgewicht beträgt 0,15.

Beispiel 28

Man lässt das Intermediär der Art und Menge wie im Beispiel 27 beschrieben mit 6,2 g (60 mMol) Diethylentriamin bei einer Temperatur von 175 °C und einem Druck von 3 x 10² kPa 5 Stunden lang reagieren, dann wird bei einer Temperatur von 100 °C mit 36 g (15 mMol) Polyisobutylen-Bernsteinsäureanhydridesteramidimid (Komad-310, Mol Rt.) vermischt. Der Ansatz wird bei einer Temperatur von 100 °C und atmosphärischem Druck 3 Stunden lang, und bei einem Druck von 15 kPa 1 Stunde lang gerührt. Das leicht filtrierbare Endprodukt zeigt einen Stickstoffgehalt von 0,62 Gew.%, das Verhältnis der Komponenten mit höherem Molgewicht zu denen mit niedrigerem Molgewicht beträgt 1,5.

Beispiel 29

In einem Autoklav, beschrieben im Beispiel 1, werden 503 g (200 mMol) Intermediär nach Beispiel A in inerter Atmosphäre unter Rühren und atmosphärischen Umständen zuerst bei einer Temperatur von 100 °C mit 1,8 g Glycerin und auf das Endprodukt bezogen mit 0,3 Gew.% Petroleumsulfonsäure, dann bei einer Temperatur von 140 °C mit 5,7 g (30 mMol) Tetraethylenpentamin, schliesslich bei einer Temperatur von 170 °C mit 1,5 g (10 mMol) Triethanolamin vermischt. Man lässt den Ansatz bei einer Temperatur von 195 °C und einem Druck von 5 x 10² kPa 5 Stunden lang reagieren. Der Ansatz wird bei einer Temperatur von 140 °C mit 84 g (20 mMol) Mischung von Mono- und Bissuccinimid-Derivaten (Komad-1302, Mol Rt.) vermischt, bei einer Temperatur von 175 °C und einem Druck von 15 kPa 3 Stunden lang reagieren gelassen, und schliesslich filtriert. Das filtrierte Endprodukt zeigt einen Stickstoffgehalt von 0,57 Gew.%, das Verhältnis der Komponenten mit höherem Molgewicht zu denen mit niedrigerem Molgewicht beträgt 0,01.

Beispiel 30

In einem Autoklav, beschrieben im Beispiel 1, werden 408,7 g (200 mMol) Intermediär nach Beispiel E bei einer Temperatur von 80 °C mit 4,1 g (40 mMol) Diethylentriamin, dann bei einer Temperatur von 140 °C mit 3,8 g (20 mMol) Tetraethylenpentamin vermischt. Der Ansatz wird bei einer Temperatur von 185 °C und einem Druck von 4 x 10² kPa 4 Stunden lang acyliert, dann mit 24 g Polyisobutenyl-Bernsteinsäureester (Komad-310G, Mol Rt.) und 25 g Kupferacetat vermischt. Man lässt den Ansatz bei einer Temperatur von 195 °C 3 Stunden lang bei einem Druck von 5 x 10² kPa und 1,5 Stunden bei einem Druck von 15 kPa reagieren. Das filtrierte Endprodukt zeigt einen Stickstoffgehalt von 0,64 Gew.%, das Verhältnis der Komponenten mit höherem Molgewicht zu denen mit niedrigerem Molgewicht beträgt 0,25.

Um eine leichtere Handhabung, sowie bessere und anschaulichere Vergleichbarkeit zu sichern wird der Ölgehalt des erhaltenen Endproduktes vor der weiteren Verwendung in jedem Falle auf einen Wert von 50 Gew.% eingestellt. Wenn das erhaltene Endprodukt einen Ölgehalt kleiner als 50 Gew.% zeigt, wird es mit einer solchen Ölkomponente auf diesen Weise verdünnt, deren Qualität der in der Synthese verwendeten Ölkomponente entspricht. Die Verdünnung wurde mit Schmierölraffinaten, die im Beispiel A, bzw. B beschrieben wurden, durchgeführt.

Auf Grund der wichtigsten Qualitätsmerkmale der nach Beispielen A-K hergestellten Intermediären wurde festgestellt, daß die erfindungsgemäss verwendeten Initiatoren und Reaktionsregulatoren zwischen Polyolefin und MSA eine Reaktion ermöglichen, bei welcher sich einem Polyolefinmolekül durchschnittlich mehr als 1,5, insbesondere mehr als 3 Maleinsäureanhydride anlagern, und die Bildung von alternierendes Polyolefin/Maleinsäureanhydrid Copolymer nicht charakteristisch ist.

Die detergierend-dispergierende Wirkung der in Beispielen hergestellten Zusatzstoffe wird nach den in der HU-PS 205,778 beschriebenen Methoden bewertet. Die PDDH-Wertzahlen werden als 225-igstel Anteil der Summe der dispersionsstabilierenden Wirkung (Detergensindex, DI, %) und der Verschmutzungsabwaschwirkung (M, mm) bestimmt und in Prozent angegeben. Die ablagerunsverhindernde Wirkung wird analog der in der zitierten Schrift beschriebenen Methoden anhand der in lamellarem Koksofen erhaltenen Ergebnissen bestimmt.

Die detergierend-dispergierende Wirkung der Endprodukte nach Beispielen 1-30 in Schmierölen wird in Tabelle 1 angegeben. Für die Wirkungsuntersuchungen werden die Endprodukte in einer Menge von 3 Gew.% in ein Grundöl eingemischt, welches eine kinematische Viskosität von 5,2 mm²/s (100 °C), und einen Viskositätsindex von 101 aufweist.

Die Ergebnisse der Untersuchungen der detergierenddispergierenden Wirkung von Ölkompositionen, die mit Endprodukten der Beispiele 3, 6, 8 und 14, weiterhin mit Referenzprodukten hergestellt wurden, werden in Tabelle 2, die Wirkung der Zusatzstoffkompositionen nach den Beispielen 8, 15 und 28, sowie der Referenzzusatzstoffe zur Verbesserung der Fliesseigenschaften wird in Tabelle 3 und die abriebinhibierende Wirkung der Zusatzstoffkompositionen der Beispiele 11 und 22, sowie der Referenzzusatzstoffe wird in Tabelle 4 angegeben.

Die Intermediäre der Beispiele A-E, H, I und K, sowie der aus diesen hergestellten Endprodukte der Beispiele 1-6, 8-12, 17, 20, 22, 24 und 26-30 zeigen eine erfindungsgemässe Struktur und Zusammensetzung, und wurden unter

## EP 0 658 572 B1

den erfindungsgemässen Verfahrensparametern und deren vorteilhaften Kombinationen (wie in Gegenwart von Verbindungen, welche die unerwünschten Nebenreaktionen und alternierende Polimerisation verhindern, bei einer günstigen Konzentration von Initiator und MSA, sowie bei einem günstigen Verhältnis von Bernsteinsäureanhydrid:Polyamin und/oder Polyol bei günstigen Druck- und Temperaturverhältnissen, in Gegenwart von Katalysatoren, die die Acylierung und dadurch die Struktur des Endproduktes beeinflussen, und mit Verwendung von Modifikatoren) hergestellt.

Tabelle 1

| Ergebnisse der DD-Wirkungsuntersuchungen von Zusatzstoffkompositionen (in SN-150 Öl in einer Konzentration von 3 Gew.%) | |
|---|---|
| **Beispiel** | **PDDH (%) *** (max. 100) |
| Grundöl | 1 |
| 1 | 88 |
| 2 | 86 |
| 3 | 79 |
| 4 | 73 |
| 5 | 73 |
| 6 | 81 |
| 7 | 69 |
| 8 | 91 |
| 9 | 86 |
| 10 | 79 |
| 11 | 94 |
| 12 | 78 |
| 13 | 63 |
| 14 | 51 |
| 15 | 60 |
| 16 | 32 |
| 17 | 93 |
| 18 | |
| 19 | unbewertbar |
| 20 | 86 |
| 21 | unbewertbar |
| 22 | 95 |
| 23 | 40 |
| 24 | 70 |
| 25 | unbewertbar |
| 26 | 90 |
| 27 | 87 |
| 28 | 92 |
| 29 | 84 |
| 30 | 88 |

*: PDDH = Potentielle detergierend-dispergierende Wirkung

**15**

Tabelle 2

| Ergebnisse der Untersuchungen der DD-Eigenschaften von Ölkompositionen | | |
|---|---|---|
| Beispiel * | PDDH (%) ** | Ablagerung auf den Lamellen (mg) |
| 3 | 82 | 4,5 |
| 6 | 90 | 5,4 |
| 8 | 92 | 3,2 |
| 14 | 70 | 12,0 |
| Referenz (KOMAD-301) *** | 81 | 9,0 |

*: Zusammensetzung der Kompositionen:
91,0 Gew.% SAE-30 Grundöl
4,0 Gew.% Zusatzstoffkomposition gemäß den Beispiele 3, 6, 8 oder 14
3,8 Gew.% hyperbasisches Ca-Sulfonat
2,2 Gew.% Zn-dialkyldithiophosphat.

**: PDDH = potentielle detergierend-dispergierende Wirkung

***: KOMAD-301 = Mn(PIB) 950, Menge: 4,0 Gew.% (Mol Rt.)

Tabelle 3

| Fliesseigenschaften verbessernde Wirkung der Zusatzstoffkompositionen (in SN-150 Öl, Menge: 4,0 Gew.%) | | | | |
|---|---|---|---|---|
| Beispiel | VK*(100 °C) (mm²/s) | VK-Erhöhung (%) | VI** | Erstarrungspunkt (°C) |
| Grundöl | 5,2 | - | 101 | -17 |
| 8 | 6,4 | 23 | 123 | -21 |
| 15 | 6,3 | 21 | 103 | -16 |
| 28 | 6,6 | 27 | 127 | -22 |
| Referenz (KOMAD-301) | 5,8 | 11 | 107 | -17 |

*: VK = Viskosität

**: VI = Viskositätsindex

Tabelle 4

| Ergebnisse der Untersuchungen der abriebinhibitierenden Wirkung der Zusatzstoffkompositionen (in SN-150 Öl) | | | |
|---|---|---|---|
| Beispiel | Abriebdurchmesser (mm) | Temperaturerhöhung (°C) | Zusatzstoffkonzentration (%) |
| Grundöl | 1,21 | 38 | - |
| 11 | 0,62 | 25 | 3,0 |
| 22 | 0,61 | 27 | 3,0 |
| Referenz REONIT M (Polyalkylmetakrilat) | 1,11 | 32 | 10,0 |
| KOMAD-301 | 1,11 | 34 | 3,0 |

Die Struktur und Zusammensetzung der Intermediäre, bzw. Endprodukte nach Beispielen F, G und J, weiterhin 7, 13-16, 18, 19, 21, 23 und 25, sowie deren Herstellungsverfahren weichen von der günstigen erfindungsgemässen Struktur und Verfahren ab. So wurden z.B. in den Beispielen F, G und J Intermediäre, welche nicht die erfindungsgemässe vorteilhafte Struktur zeigen, hergestellt, wobei nicht die erfindungsgemässen technologischen Massnahmen verwendet wurden, im Beispiel 7 wurde nicht das günstige Molverhältnis von Bernsteinsäureanhydridgruppen zu Polyamin und Polyol verwendet, und in den Beispielen 13-16 und 21 wurde das Endprodukt nicht aus erfindungsgemässen Intermediären und nicht unter den erfindungsgemässen verfahrensmassnahmen synthetisiert, und schliesslich wurde in den Beispielen 18, 19 und 25 das Endprodukt nicht unter den erfindungsgemässen technologischen Massnahmen hergestellt.

Die Ergebnisse der detergierend-dispergierenden, Fliesseigenschaften modifizierenden und abriebinhibierenden Wirkungsuntersuchungen, die in Tabellen 1-4 angegeben sind, die Endprodukte mit erfindungsgemässer Struktur und Zusammensetzung, die durch die erfindungsgemässe Acylierung und Modifizierung aus Intermediären hergestellt wurden, welche ebenfalls eine erfindungsgemässe Struktur und Zusammensetzung zeigen und durch die erfindungsgemässen Verfahrensmassnahmen hergestellt wurden, weisen darauf hin, daß die geprüften Wirksamkeiten der erfindungsgemässen Endprodukte die Wirksamkeit der Referenzzusatzstoffe erreichen oder übersteigen, d.h., sie zeigen eine höhere, detergierend-dispergierende Wirkung im Grundöl, sowohl in sich selbst, als auch in Ölkompositionen, und daneben besitzen sie eine günstige, viskositätsindexerhöhende und abriebinhibierende Wirkung.

In den Tabellen 5 und 6 werden die Ergebnisse von Motoruntersuchungen, durchgeführt an Motorölkompositionen, die aus Zusatzstoffen nach Beispielen 1, 2 und 27, sowie aus handelsüblichen Zusatzstoffen hergestellt wurden, zusammengefasst.

Auf Grund der Ergebnisse kann man feststellen, daß die Motorölkompositionen und die Endprodukte, die die erfindungsgemässe Zusammensetzung zeigen und durch das erfindungsgemässe Verfahren synthetisiert wurden, den DEF STAN 91-43/1 Vorschriften entsprechen, bzw. die Motorölkomposition, die das Endprodukt nach Beispiel 27 enthält, in der Motoruntersuchung nach CEC-L-41-T-88 eine bedeutend günstigere Wirksamkeit zeigt, als die Referenzöle.

Tabelle 5

| **Ergebnisse von Motoruntersuchungen nach PETTER W-1** (36 Stunden) | | | | |
|---|---|---|---|---|
| **Kennzeichen** | **Beispiel** | | **Referenzöl** | **DEF STAN 97-43/11** |
| | **1** | **2** | | |
| Gewichtsverlust im Cu/Pb-Lager (mg) | 20,0 | 18,9 | 22,0 | max. 25 |
| Viskositätserhöhung (40 °C; %) | 8,6 | 15,1 | 32,0 | max. 50 |
| Zusammensetzung der Motorölkomposition (SAE-15W-40):<br>3,0 Gew.% aschefreie DD Zusatzstoff<br>3,1 Gew.% handelsübliche Zusatzstoffe<br>1,85 Gew.% viskositätserhöhender und fliesspunktvermindernder Zusatzstoff<br>92,05 Gew.% SN-250 Grundöl. | | | | |

Tabelle 6

| **Ergebnisse der Motoruntersuchungen nach CEC-L-41-T-88** | | | | |
|---|---|---|---|---|
| **Kennzeichen** | | **Beispiel 27** | **Referenzuntersuchungen** | |
| | | | **I** | **II** |
| | | | **zum CCMC G-4 Niveau mit RL-140/12 Öl** | **zum CCMC G-5 Niveau mit RL-139/5 Öl** |
| 1. | Schlammbewertung | | | |
| | Zylinderkopfdeckel | 9,24 | 7,98 | 8,74 |
| | Ölsaugrohr | 9,45 | 7,10 | 8,92 |
| | Zylinderkopf | 8,48 | 9,78 | 7,85 |
| | Schwengelhausdekkel | 9,21 | 8,02 | 9,10 |
| | Ölwanne | 8,78 | 6,35 | 7,54 |
| | Durchschnitt der 5 Teile | 9,032 | 7,046 | 8,496 |
| 2. | Festlauf der Kolbenringe | kein | kein | kein |
| 3. | Reinheit der Kolben Mittelwert, | | | |
| | erste Nuten | -30 | -30 | -30 |
| | zweite Nuten | -4,1 | -13,1 | -6,4 |
| 4. | Nockenabrieb | | | |
| | Durchschnitt ($\mu$m) | 5,9 | 5,6 | 8,9 |
| | max. (($\mu$m) | 9,5 | 9,3 | 12,5 |
| 5. | Schwinghebelsohlenabrieb | | | |
| | Durchschnitt ($\mu$m) | 3,3 | 3,8 | 4,1 |
| | max. ($\mu$m) | 6,5 | 5,0 | 6,3 |
| 6. | Ölverbrauch (g/h) | 10,0 | 58,0 | 128,0 |

Tabelle 6   (fortgesetzt)

| Ergebnisse der Motoruntersuchungen nach CEC-L-41-T-88 | | | | |
|---|---|---|---|---|
| Kennzeichen | | Beispiel 27 | Referenzuntersuchungen | |
| | | | I | II |
| | | | zum CCMC G-4 Niveau mit RL-140/12 Öl | zum CCMC G-5 Niveau mit RL-139/5 Öl |
| Zusammensetzung der Motorölkomposition:<br><br>9,0 Gew.% Zusatzstoff nach Beispiel 27<br><br>5,0 Gew.% handelsübliche Zusatzstoffe<br><br>1,15 Gew.% viskositätserhöhender und fliesspunktvermindernder Zusatzstoff<br><br>84,5 Gew.% SN-200 Grundöl. | | | | |

## Patentansprüche

1. Aschefreie, detergierend-dispergierend wirkende Zusatzstoffkomposition enthaltend Polyolefin-Bernsteinsäureanhydrid-Derivate oder deren ölige Lösung, die in Schmierölzubereitungen von Verbrennungsmotoren verwendbar ist, dadurch gekennzeichnet, daß sie aus Komponenten besteht, die an Polyolefinketten mit gleichem numerischen Durchschnittsmolgewicht durchschnittlich 1,3-6 Bernsteinsäureanhydrid-Derivat tragen, wobei die Menge von Molekülen mit mehr als drei Bernsteinsäureanhydrid-Derivaten 0,1-15 Gew.% beträgt, und wobei das Derivat ein Imid- und/oder Ester- und/oder Amid und/oder Esteramid-Derivat sein kann, und daß die Zusatzstoffkomposition mindestens zwei Komponenten mit verschiedenen - einem niedrigeren und einem höheren - numerischen Durchschnittsmolgewichten enthält, wobei die Zahl der durch Carboxylgruppen verbundenen Moleküle in den Komponenten mit niedrigerem Duchschnittsmolgewicht durchschnittlich 2-5 und in den Komponenten mit höherem Durchschnittsmolgewicht durchschnittlich 6-50 beträgt, und wobei das numerische Durchschnittsmolgewicht der Komponenten mit niedrigerem Molgewicht kleiner ist als das Sechsfache des Durchschnittsmolgewichts des Ausgangspolyolefins, und das Gewichtsverhältnis der Komponenten mit höherem Molgewicht zu den Komponenten mit niedrigerem Molgewicht 0,01-5 beträgt.

2. Zusatzstoffkomposition nach Anspruch 1, dadurch gekennzeichnet, daß das numerische Durchschnittsmolgewicht der Polyolefin-Kette 600-50.000, vorzugsweise 800-6000 beträgt.

3. Zusatzstoffkomposition nach Anspruch 1, dadurch gekennzeichnet, daß sie an Polyolefinketten durchschnittlich 1,3-3 Bernsteinsäureanhydrid-Derivate trägt.

4. Zusatzstoffkomposition nach Anspruch 1, dadurch gekennzeichnet, daß sie an einer Polyolefinkette gleiche oder verschiedene Bernsteinsäureanhydrid-Derivate trägt.

5. Zusatzstoffkomposition nach Anspruch 1, dadurch gekennzeichnet, daß die Menge der Moleküle mit mehr als drei Bernsteinsäureanhydrid-Derivaten 0,5-5 Gew.% beträgt.

6. Zusatzstoffkomposition nach Anspruch 1, dadurch gekennzeichnet, daß das Gewichtsverhältnis der Komponenten mit höherem Molgewicht zu den Komponenten mit niedrigerem Molgewicht 0,01-3 beträgt.

7. Verfahren zur Herstellung von aschefreien, detergierend-dispergierend wirkenden Zusatzstoffkompositionen enthaltend Polyolefin-Bernsteinsäureanhydrid-Derivate oder deren öligen Lösungen, dadurch gekennzeichnet, daß man an Polyolefin mit gleichem numerischen Durchschnittsmolgewicht Maleinsäureanhydrid addiert, wobei das Molverhältnis Maleinsäureanhydrid/Polyolefin 1,5-3,5 beträgt, und die Addition in 20-75 Gew.% eines, eine homogene Phase gewährleistenden Lösungsmittels, bezogen auf die Reaktionsmischung, in Gegenwart von 5-25 Gew.% eines Radikalinitiators und 0,01-15 Gew.% eines nebenreaktionsinhibierenden Reagens, bezogen auf das Maleinsäureanhydrid, bei einem Druck von 1-5 X $10^2$ kPa, einer Temperatur von 110-180°C, einer Zeitdauer von 1-16 Stunden und einer Maleinsäureanhydridkonzentration unter 50 mg/g durchgeführt wird, und das erhaltene Zwischenprodukt, in welchem ein Polyolefinmolekül durchschnittlich 1, 3-6 Bernsteinsäureanhydrid-Derivate trägt, die Menge der Moleküle mit mehr als drei Bernsteinsäureanhydrid-Derivate 0,1-15 Gew.% beträgt und die Verbreitung der Molgewichtsverteilung bezogen auf das Ausgangspolyolefin, höchstens 50%, beträgt, gewünschtenfalls mit Schmierölraffinat verdünnt, mit 0,5-5 Gew.% Filtrierhilfsstoff geklärt und filtriert wird, dann das Zwischenprodukt mit einer oder mehreren, mindestens bifunktionalen Verbindung, die Amin- und/oder Hydroxygruppen enthält, umgesetzt wird, wobei das Molverhältnis der Bernsteinsäureanhydrid-Derivate zu der Verbindung, die Aminund/oder Hydroxygruppen enthält, 0.7-5.5 beträgt, und die Acylierung in Gegenwart von bezogen auf die Reaktionsmischung 0,1-2 Gew.% eines Katalysators, bei einem Druck von 1-6 X $10^2$ kPa, einer Temperatur von 120-235°C und einer Zeitdauer von 2-15 Stunden durchgeführt, und die erhaltene Komposition gewünschtenfalls auf bekannte Weise modifiziert, verdünnt und filtriert wird.

8. Verfahren nach Anspruch 7, dadurch gekennzeichnet, daß man Polyolefin mit einem numerischen Durchschnittsmolgewicht von 600-50.000, vorzugsweise 800-6000 verwendet.

9. Verfahren nach Anspruch 7, dadurch gekennzeichnet, daß man bei der Addition ein Lösungsmittel verwendet, welches mindestens zu 5 Gew.% aus Komponenten mit einem Siedepunkt von 110-250°C besteht und in welchem mindestens 20% der Kohlenstoffatome in Aromatenbindung steht.

10. Verfahren nach Anspruch 7, dadurch gekennzeichnet, daß man bei der Acylierung als Katalysator eine saure oder basische Verbindung, vorzugsweise Petroleumsulfonsäure, Schwefelsäure, Triethanolamin oder Ethanolamin, oder Ionenaustauscherharz verwendet.

11. Verfahren nach Anspruch 7, dadurch gekennzeichnet, daß man die Modifizierung mit Verbindungen, die Bor, Schwefel, Kupfer und/oder Molybdän enthält, und/oder mit Polyalkenylbernsteinsäure-imid oder -esteramid durchführt.

12. Zwischenprodukt zur Herstellung von aschefreien, detergierend-dispergierend wirkenden Zusatzstoffkompositionen enthaltend Polyolefin-Bernsteinsäureanhydrid-Derivate, dadurch gekennzeichnet, daß es aus Komponenten besteht, die an Polyolefinketten mit gleichem numerischen Durchschnittsmolgewicht durchschnittlich 1,3-6 Bernsteinsäureanhydrid-Derivate tragen, wobei die Menge der Moleküle mit mehr als drei Bernsteinsäureanhydrid-Derivate 0,1-15 Gew.% beträgt und die Verbreiterung der Molgewichtsverteilung, bezogen auf das Ausgangspolyolefin, höchstens 50% beträgt.

13. Verfahren zur Herstellung von Zwischenprodukten nach Anspruch 12, dadurch gekennzeichnet, daß man an Polyolefin mit gleichem numerischen Durchschnittsmolgewicht Maleinsäureanhydrid addiert, wobei das Molverhältnis Maleinsäureanhydrid/Polyolefin 1,5-3,5 beträgt, und die Addition bezogen auf die Reaktionsmischung in 20-75 Gew.% eines, eine homogene Phase gewährleistenden Lösungsmittels, in Gegenwart von, bezogen auf das Maleinsäureanhydrid, 5-25 Gew.% eines Radikalinitiators und 0,01-15 Gew.% eines Nebenreaktionen inhibierenden Reagens, bei einem Druck von 1-5 x $10^2$ kPa, einer Temperatur von 110-180°C, einer Zeitdauer von 1-16 Stunden und einer Maleinsäureanhydridkonzentration unter 50 mg/g durchgeführt wird.

**Claims**

1. Ash-free additive composition with a detergent and dispersant activity, containing polyolefin-succinic acid anhydride derivatives or an oily solution thereof, which can be used in lubricant preparations for combustion engines, characterised in that it consists of components which carry on average 1.3 - 6 succinic acid anhydride derivative on polyolefin chains having the same average numerical molecular weight, the quantity of molecules with more than three succinic acid anhydride derivatives being 0.1 - 15 wt.%, whilst the derivative may be an imide and/or ester and/or amide and/or ester amide derivative, and the additive composition contains at least two components having different average numerical molecular weights, one lower and one higher, whilst the number of molecules bound by carboxyl groups in the components of lower average molecular weight is on average 2 - 5 and in the components with a higher average molecular weight is 6- 50 on average, and the average numerical molecular weight of the components of lower molecular weight is less than six times the average molecular weight of the starting polyolefin, and the weight ratio of the components of higher molecular weight to the components of lower molecular weight is 0.01 - 5.

2. Additive composition according to claim 1, characterised in that the average numerical molecular weight of the polyolefin chain is 600 - 50,000, preferably 800 - 6,000.

3. Additive composition according to claim 1, characterised in that it carries on average 1.3 - 3 succinic acid anhydride derivatives on polyolefin chains.

4. Additive composition according to claim 1, characterised in that it carries identical or different succinic acid anhydride derivatives on one polyolefin chain.

5. Additive composition according to claim 1, characterised in that the quantity of molecules having more than three succinic acid anhydride derivatives is 0.5 - 5 wt.%.

6. Additive composition according to claim 1, characterised in that the weight ratio of the components of higher molecular weight to the components of lower molecular weight is 0.01 - 3.

7. Process for preparing ash-free additive compositions with a detergent and dispersant activity, containing polyolefin-succinic acid anhydride derivatives or oily solutions thereof, characterised in that maleic acid anhydride is added to polyolefin with the same average numerical molecular weight, the molar ratio of maleic acid anhydride to polyolefin being 1.5 - 3.5, and the addition is carried out in 20-75 wt.%, based on the reaction mixture, of a solvent which guarantees a homogeneous phase, in the presence of 5-25 wt.% of a radical initiator and 0.01-15 wt.%, based on the maleic acid anhydride, of a reagent which inhibits side reactions, at a pressure of $1\text{-}5 \times 10^2$ kPa, a temperature of 110-180°C, for a period of 1-16 hours and at a maleic acid anhydride concentration of less than 50 mg/g, and the intermediate product thus obtained, in which one polyolefin molecule carries on average 1.3-6 succinic acid anhydride derivatives, the quantity of molecules having more than three succinic acid anhydride derivatives is 0.1-15 wt.% and the spread of the molecular weight distribution based on the starting polyolefin is not more than 50%, is diluted with refined lubricating oil if desired, clarified with 0.5-5 wt.% of filter adjuvant, then the intermediate product is reacted with one or more at least bifunctional compounds which contain amino and/or hydroxy groups, the molar ratio of the succinic acid anhydride derivatives to the compound which contains the amino and/or hydroxy groups being 0.7-5.5, and the acylation is carried out in the presence of 0.1-2 wt.%, based on the reaction mixture, of a catalyst, at a pressure of $1\text{-}6 \times 10^2$ kPa, at a temperature of 120-135°C and over a period of 2-15 hours, and, if desired, the resulting composition is modified, diluted and filtered in a known manner.

8. Process according to claim 7, characterised in that polyolefin with an average numerical molar weight of 600-50,000, preferably 800-6,000, is used.

9. Process according to claim 7, characterised in that a solvent is used during the addition which is made up of at least 5 wt.% of components with a boiling point of 110-250°C and in which at least 20% of the carbon atoms are aromatically bound.

10. Process according to claim 7, characterised in that the catalyst used in the acylation is an acidic or basic compound, preferably petroleum sulphonic acid, sulphuric acid, triethanolamine or ethanolamine, or ion exchange resin.

11. Process according to claim 7, characterised in that the modification is carried out with compounds which contain boron, sulphur, copper and/or molybdenum, and/or with polyalkenylsuccinic acid imide or ester amide.

12. Intermediate product for the preparation of ash-free additive compositions with a detergent and dispersant activity, containing polyolefin-succinic acid anhydride derivatives, characterised in that it consists of compounds which carry on average 1.3-6 succinic acid anhydride derivatives on polyolefin chains having the same average numerical molecular weight, the quantity of molecules with more than three succinic acid anhydride derivatives being 0.1 - 15 wt.%, and the spread of the molecular weight distribution, based on the starting olefin, being not more than 50%.

13. Process for preparing intermediate products according to claim 12, characterised in that maleic acid anhydride is added to polyolefin with the same average numerical molecular weight, the molar ratio of maleic acid anhydride to polyolefin being 1.5 - 3.5, and the addition is carried out in 20-75 wt.%, based on the reaction mixture, of a solvent which guarantees a homogeneous phase, in the presence of 5-25 wt.% of a radical initiator and 0.01-15 wt.%, based on the maleic acid anhydride, of a reagent which inhibits side reactions, at a pressure of $1\text{-}5 \times 10^2$ kPa, a temperature of 110-180°C, for a period of 1-16 hours and at a maleic acid anhydride concentration of less than 50 mg/g.

**Revendications**

1. Composition d'additifs à action détergente et dispersante, exempte de cendres, contenant des dérivés polyoléfiniques de l'anhydride succinique ou des solutions huileuses de ceux-ci et utilisable dans des préparations d'huiles lubrifiantes pour moteurs à combustion interne, caractérisée en ce qu'elle comprend des composants portant en moyenne de 1,3 à 6 dérivés de l'anhydride succinique sur des chaînes de polyoléfines ayant le même poids moléculaire numérique moyen, la quantité de molécules ayant plus de trois dérivés de l'anhydride succinique étant de 0,1 à 15 % en poids et le dérivé pouvant être un dérivé imide et/ou ester et/ou amide et/ou esteramide, et en ce que la composition d'additifs contient au moins deux composants ayant des poids moléculaires numériques moyen différentes : un plus faible et un plus élevé, le nombre des molécules liées par des groupes carboxyle étant de 2 à 5 en moyenne dans les composants de plus bas poids moléculaire moyen et de 6 à 50 en moyenne dans les composants de plus haut poids moléculaire moyen, le poids moléculaire numérique moyen des composants de plus bas poids moléculaire étant inférieur à six fois le poids moléculaire moyen de la polyoléfine de départ et le rapport en poids des composants ayant le plus haut poids moléculaire sur les composants ayant le plus bas poids moléculaire étant de 0,01 à 5.

2. Composition d'additifs selon la revendication 1, caractérisée en ce que le poids moléculaire numérique moyen de la chaîne de polyoléfine est de 600 à 50000, de préférence de 800 à 6000.

3. Composition d'additifs selon la revendication 1, caractérisée en ce qu'elle porte en moyenne de 1,3 à 3 dérivés de l'anhydride succinique sur des chaînes de polyoléfines.

4. Composition d'additifs selon la revendication 1, caractérisée en ce qu'elle porte des dérivés de l'anhydride succinique identiques ou différents sur une chaîne de polyoléfine.

5. Composition d'additifs selon la revendication 1, caractérisée en ce que la quantité de molécules ayant plus de trois dérivés de l'anhydride succinique est de 0,5 à 5 % en poids.

6. Composition d'additifs selon la revendication 1, caractérisée en ce que le rapport en poids des composants ayant le plus haut poids moléculaire sur les composants ayant le plus bas poids moléculaire est de 0,01 à 3.

7. Procédé de production de compositions d'additifs à action détergente et dispersante, exemptes de cendres, contenant des dérivés polyoléfiniques de l'anhydride succinique ou des solutions huileuses de ceux-ci, caractérisé en ce que l'on additionne de l'anhydride maléique à de la polyoléfine de poids moléculaire numérique moyen identique, le rapport molaire de l'anhydride maléique sur la polyoléfine étant de 1,5 à 3,5 et l'addition se faisant dans 20 à 75 % en poids, ramené au mélange réactionnel, d'un solvant garantissant une phase homogène, en présence de 5 à 25 % en poids d'un amorceur radicalaire et de 0,01 à 15 % en poids d'un réactif inhibant les réactions secondaires, ramenés à l'anhydride maléique, sous une pression de 1 à 5 x 10$^2$ kPa, à une température de 110 à 180 °C, pendant une durée de 1 à 16 heures et avec une concentration de l'anhydride maléique inférieure à 50 mg/g, et si on le souhaite, on dilue le produit intermédiaire obtenu, dans lequel une molécule de polyoléfine porte en moyenne de 1,3 à 6 dérivés de l'anhydride succinique, la quantité des molécules portant plus de trois dérivés de l'anhydride succinique est de 0,1 à 15 % en poids et la dispersion de la distribution des poids moléculaires ramenée à la polyoléfine de départ est de 50 % au maximum, avec un produit de raffinage d'huile lubrifiante, on le clarifie avec 0,5 à 5 % en poids d'un adjuvant de filtration et on le filtre, puis on fait réagir le produit intermédiaire avec un ou plusieurs composés au moins difonctionnels contenant des groupes amines et/ou hydroxy, le rapport molaire du dérivé d'anhydride succinique sur le composé contenant des groupes amines et/ou hydroxy étant de 0,7 à 5,5 et on réalise l'acylation en présence de 0,1 à 2% en poids d'un catalyseur, ramené au mélange réactionnel, sous une pression de 1 à 6 x 10$^2$ kPa, à une température de 120 à 235 °C et pendant une durée de 2 à 15 heures, et, si on le souhaite, on modifie, on dilue et on filtre d'une manière connue la composition ainsi obtenue.

8. Procédé selon la revendication 7, caractérisé en ce que l'on utilise de la polyoléfine ayant un poids moléculaire numérique moyen de 600 à 50000, de préférence de 800 à 6000.

9. Procédé selon la revendication 7, caractérisé en ce que l'on utilise dans la réaction d'addition un solvant composé pour au moins 5 % en poids de composants ayant un point d'ébullition de 110 à 250 °C et dans lequel au moins 20 % des atomes de carbone sont inclus dans une liaison aromatique.

10. Procédé selon la revendication 7, caractérisé en ce que l'on utilise comme catalyseur lors de l'acylation un composé acide ou basique, de préférence de l'acide sulfonique de pétrole, de l'acide sulfurique, de la triéthanolamine ou de l'éthanolamine, ou bien une résine échangeuse d'ions.

11. Procédé selon la revendication 7, caractérisé en ce que l'on effectue la modification avec des composés contenant du bore, du soufre, du cuivre et/ou du molybdène, et/ou avec de l'imide ou esteramide poly-alcénylsuccinique.

12. Produit intermédiaire de la fabrication de compositions d'additifs à action détergente et dispersante, exemptes de cendres, contenant des dérivés polyoléfiniques de l'anhydride succinique, caractérisé en ce qu'il se compose de composants portant en moyenne de 1,3 à 6 dérivés de l'anhydride succinique sur des chaînes de polyoléfines ayant le même poids moléculaire numérique moyen, la quantité de molécules ayant plus de trois dérivés de l'anhydride succinique étant de 0,1 à 15 % en poids et la dispersion de la distribution des poids moléculaires, ramenée à la polyoléfine de départ, est de 50 % au maximum.

13. Procédé de fabrication de produits intermédiaires selon la revendication 12, caractérisé en ce que l'on additionne de l'anhydride maléique à de la polyoléfine de poids moléculaire numérique moyen identique, le rapport molaire de l'anhydride maléique sur la polyoléfine étant de 1,5 à 3,5 et l'addition se faisant dans 20 à 75 % en poids, ramené au mélange réactionnel, d'un solvant garantissant une phase homogène, en présence de 5 à 25 % en poids d'un amorceur radicalaire et de 0,01 à 15 % en poids d'un réactif inhibant les réactions secondaires, ramenés à l'anhydride maléique, sous une pression de 1 à 5 x $10^2$ kPa, à une température de 110 à 180 °C, pendant une durée de 1 à 16 heures et avec une concentration de l'anhydride maléique inférieure à 50 mg/g.